# EUROPEAN PATENT APPLICATION

(11) **EP 4 496 233 A1**
(43) Date of publication of application: **22.01.2025**
(21) Application number: 23819974.9
(22) Date of filing: 11.04.2023
(51) Int. Cl.: H04B 5/00, H02J 50/90, H02J 50/10, H02J 50/80, H02J 7/00, H04B 5/02, H04B 1/3827

(54) **ELECTRONIC DEVICE AND METHOD FOR WIRELESSLY TRANSMITTING OR RECEIVING POWER**

(30) Priority: 10.06.2022 KR 20220071074; 15.07.2022 KR 20220087498
(71) Applicant: Samsung Electronics Co., Ltd, Suwon-si, Gyeonggi-do 16677 (KR)
(72) Inventor: LEE, Byoungyoun, Suwon-si Gyeonggi-do 16677 (KR); JEONG, Hyeonyeong, Suwon-si Gyeonggi-do 16677 (KR); HONG, Jongchul, Suwon-si Gyeonggi-do 16677 (KR)
(74) Representative: HGF
(86) International application number: PCT/KR2023/004873
(87) International publication number: WO 2023/239037

(57) **Abstract**

An electronic device according to an embodiment may, when instructions are executed, identify an external electronic device that is in contact with one surface of a housing on which a coil is disposed, by using a communication circuit. In a first state in which power is received by wire through an interface, the electronic device may, by using the communication circuit, request the external electronic device to display a screen for selective transmission of the power, which has been received by wire, to one of a battery and the external electronic device. The electronic device may transmit, on the basis of identification of a first input for selecting the battery in the screen using the external electronic device, the power to the battery among the battery and the external electronic device.

## Description

### [Technical Field]

Various embodiments relate to an electronic device and a method for wirelessly transmitting or receiving power.

### [Background Art]

Recently, the spread of various type of a portable electronic device such as a smartphone, a tablet personal computer (PC), a wireless earphone, and a smart watch is expanding. The electronic device may include a battery. In case that the remaining amount of the battery is less or equal to a certain amount, charging may be required.

A wireless charging method includes a magnetic induction method capable of charging an electronic device such as a smartphone, a wireless earphone and a smart watch using a coil, and a magnetic resonance method capable of charging an electronic device such as home appliances, a lighting device, and an electric vehicle (EV) using the coil or a resonator.

### [Disclosure]

### [Technical Solution]

An electronic device according to an embodiment may include a housing, an interface for receiving power by wire, a coil disposed on a side of the housing for transmitting wirelessly the power to an external electronic device different from the electronic device, communication circuitry for communicating with the external electronic device, a battery, memory for storing instructions, and at least one processor operably coupled to the coil, the communication circuitry, the battery, the interface and the memory. The at least one processor, when the instructions are executed, may identify, using the communication circuitry, the external electronic device contacted with the side of the housing where the coil is disposed. The at least one processor, when the instructions are executed, in a first state for receiving the power by wire through the interface, may request, to the external electronic device using the communication circuitry, a display of a screen for transmitting selectively the power received by the wire to any one of the battery or the external electronic device. The at least one processor, when the instructions are executed, based on identification of a first input selecting the battery in the screen using the external electronic device, may transmit power outputted from the interface to the battery of the battery or the external electronic device. The at least one processor, when the instructions are executed, based on identification of a second input selecting the external electronic device in the screen using the external electronic device, may transmit the power to the external electronic device of the battery or the external electronic device. The at least one processor, when the instructions are executed, in a second state different from the first state, based on whether a state of charge(SoC) of the battery is equal to or larger than a preset SoC, may be configured to transmit, to the external electronic device, power outputted from the battery.

A method of an electronic device according to an embodiment may include identifying, using communication circuitry, an external electronic device contacted with a side of a housing where a coil is disposed. The method may include, based on a first data signal receiving from the external electronic device, displaying a screen for selecting any one of the electronic device or the external electronic device in the display. The method may include, based on identifying an input selecting the electronic device in the screen, transmitting, to the external electronic device through the communication circuitry, a second data signal corresponding to the identified input. The method may include receiving power outputted from the external electronic device using the coil, based on the transmitted second data signal.

An electronic device according to an embodiment may include a housing, a coil disposed on a side of the housing for transmitting wirelessly the power to an external electronic device different from the electronic device, communication circuitry for communicating with the external electronic device, a battery, an interface for receiving the power by wire, memory for storing instructions, and at least one processor operably coupled to the coil, the communication circuitry, the battery, the interface and the memory. The at least one processor, when the instructions are executed, in a state for receiving the power by wire through the interface, may identify, using the communication circuitry, the external electronic device contacted with the side of the housing where the coil is disposed. The at least one processor, when the instructions are executed, in response to identifying the external electronic device, through the communication circuitry, may transmit a first data signal including information of the electronic device. The at least one processor, when the instructions are executed, using the communication circuitry, may receive a second data signal including information of the external electronic device based on the first data signal. The at least one processor, when the instructions are executed, in response to receiving the second data signal, based on a SoC of the external electronic device, may transmit the power to any one of the external electronic device or the battery.

The electronic device according to an embodiment may include the housing, the coil disposed on the side of the housing for transmitting wirelessly the power to the external electronic device different from the electronic device, the communication circuitry for communicating with the external electronic device, the battery, a display, the memory for storing the instructions, and at least one processor operably coupled to the coil, the communication circuitry, the battery, the display and the memory. The at least one processor, when the instructions are executed, may identify, using the communication circuitry, the external electronic device contacted with the side of the housing where the coil is disposed. The at least one processor, when the instructions are executed, based on the first data signal receiving from the external electronic device, may display the screen for selecting any one of the electronic device or the external electronic device in the display. The at least one processor, when the instructions are executed, based on identifying the input selecting the electronic device in the screen, may transmit, to the external electronic device through the communication circuitry, the second data signal corresponding to the identified input. The at least one processor, when the instructions are executed may receive the power outputted from the external electronic device using the coil, based on the transmitted second data signal.

The method of an electronic device according to an embodiment may include, in the first state for receiving the power by wire through the interface, identifying, using the communication circuitry, the external electronic device contacted with the side of the housing where the coil is disposed. The method may include, in response to identification of the external electronic device, through the communication circuitry, transmitting the first data signal including the information of the electronic device. The method may include, using the communication circuitry, receiving the second data signal including the information of the external electronic device based on the first data signal. The method may include, in response to receiving the second data signal, based on the SoC of the external electronic device, transmitting the power to the external electronic device or the battery.

### [Description of the Drawings]

FIG. 1 is an exemplary diagram of an interaction of a plurality of electronic devices according to an embodiment.
FIG. 2 is a block diagram of an electronic device according to an embodiment.
FIG. 3 is an exemplary diagram to describe transmitting or receiving power by an electronic device according to an embodiment.
FIG. 4 is an exemplary diagram in which an electronic device according to an embodiment transmits a signal for establishing a communication link with an external electronic device.
FIGS. 5A to 5B are an exemplary drawing for describing an interrupt using at least one of electronic devices or an external electronic device according to an embodiment.
FIG. 6 is an exemplary diagram of a screen in which an electronic device according to an embodiment displays charging information through a display.
FIG. 7 is an exemplary flowchart for describing an operation in which an electronic device according to an embodiment transmits power to an external electronic device.
FIG. 8 is an exemplary flowchart for describing an operation in which an external electronic device according to an embodiment receives power from an electronic device.
FIG. 9 is an exemplary flowchart for describing an operation in which while receiving power by wire, an electronic device according to an embodiment transmits power to an external electronic device.
FIG. 10 illustrates an exemplary signal flowchart between an electronic device and an external electronic device according to an embodiment.

### [Mode for Invention]

Hereinafter, various embodiments of the present document will be described with reference to an accompanying drawing.

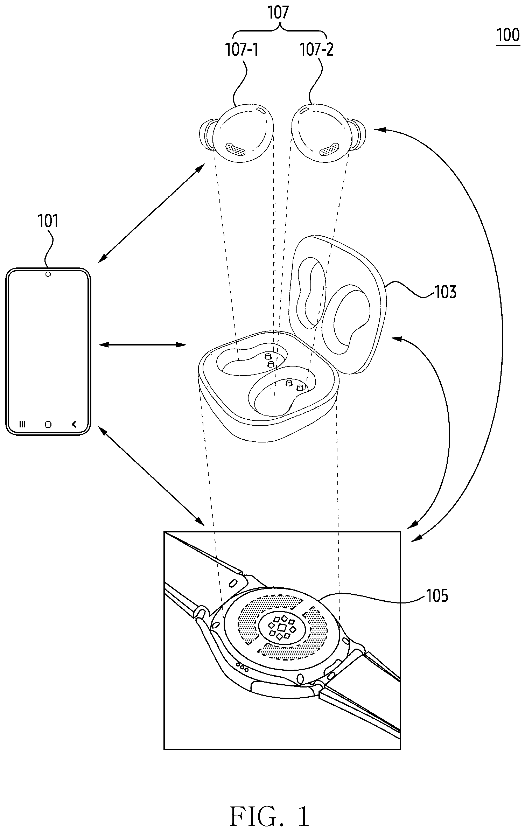

FIG. 1 is an exemplary diagram of an interaction of a plurality of electronic devices according to an embodiment. Referring to FIG. 1, a state 100 may include the interaction between the plurality of electronic devices 101, 103, 105 and 107. The electronic device 101 and the plurality of electronic devices 103, 105, and 107 according to an embodiment may interact by wire and/or wirelessly. The electronic device 105 may be referred to as a first external electronic device 105 in terms of being located outside at least one of the electronic devices 101 or the electronic device 103. The electronic device 107 may be referred to as a second external electronic device 107 in terms of being located outside at least one of the electronic devices 101 or the electronic device 103. For example, the electronic device 101 may be an audio source device such as a smartphone, a laptop computer, or a tablet PC. The first external electronic device 105 may be the electronic device such as a smartphone, a laptop computer, a tablet PC, or a smart watch. The second external electronic device 107 may be audio sink devices such as earbuds or earphones.

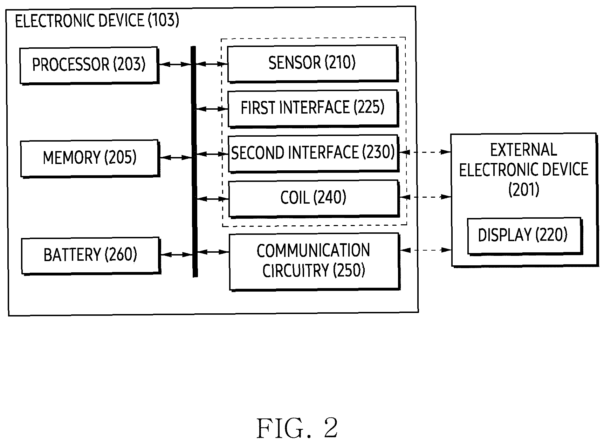

The electronic device 103, the first external electronic device 105, and/or the second external electronic device 107 according to an embodiment may interact with each other wirelessly and/or by wire. The interaction may mean that at least two of the electronic device 103, the first external electronic device 105, and/or the second external electronic device 107 establish a communication link through communication circuitry. The interaction may mean that at least two of the electronic device 103, the first external electronic device 105, and/or the second external electronic device 107 establish a connection for receiving and/or transmitting power using one of a coil and/or an interface. A component of the plurality of electronic devices 101, 103, 105 and 107 such as the communication circuitry, at least one coil, and/or the interface will be described later in FIG. 2.

The electronic device 103 according to an embodiment may include a battery for charging at least one of the external electronic devices 105 and 107. For example, the electronic device 103 may include at least one coil for wirelessly charging the first external electronic device 105. The electronic device 103 may include at least one interface for charging the second external electronic device 107 by wire. For example, the electronic device 103 may include a part for accommodating the second external electronic device 107. The part may be formed in at least a part of a housing of the electronic device 103. The electronic device 103 may accommodate the second external electronic device 107, based on the part formed in at least the part of the housing. As an example, the part may be formed in at least one of an outside or an inside of the housing of the electronic device 103. The electronic device 103 may establish the connection by wire with the accommodated second external electronic device 107 through at least one interface. Based on the established connection, the electronic device 103 may transmit the power to the second external electronic device 107. The second external electronic device 107 may charge the battery of the second external electronic device 107, based on receiving the power. The electronic device 103 may indicate a state of charge (SOC) of the second external electronic device 107 by using at least one light emitting diode (LED).

The electronic device 103 according to an embodiment may transmit and/or receive the power by wire, using at least one interface. For example, the electronic device 103 may establish the connection with at least one cable by wire, using the at least one interface. The electronic device 103 may charge the battery of the electronic device 103 based on receiving the power from the at least one cable. For example, the electronic device 103 may transmit the power to the second external electronic device 107 by wire through the interface different from the at least one interface above. A configuration of the at least one interface and the different interface will be described later in FIG. 2.

According to an embodiment, the electronic device 103 may wirelessly transmit and/or receive the power, using at least one coil. For example, the electronic device 103 may wirelessly charge the battery of the electronic device 103, based on the received power, using the coil. For example, the electronic device 103 may wirelessly transmit the power to the first external electronic device 105, using the coil.

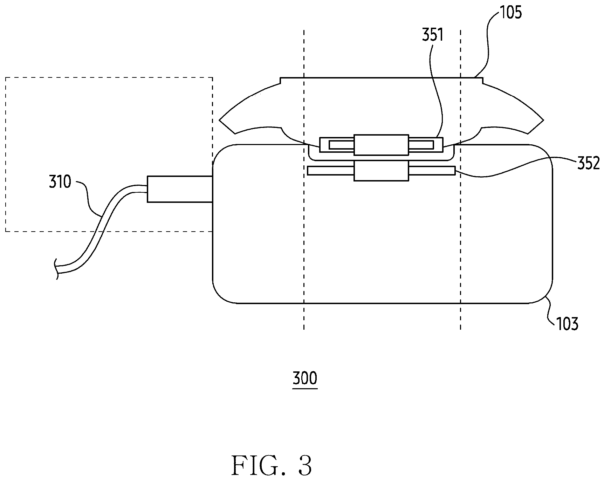

The electronic device 103 according to an embodiment may transmit the power to the first external electronic device 105 and/or the second external electronic device 107, based on the battery of the electronic device 103. An operation in which the electronic device 103 identifies the first external electronic device 105 contacted with a side of the housing in which the coil is disposed and wirelessly transmits the power will be described later in FIG. 3.

The electronic device 101 according to an embodiment may receive data on the SOC of the electronic device 103 by using at least one communication circuitry. The electronic device 101 may display a screen related to the data through a display. For example, the electronic device 101 may adjust the interaction between the plurality of electronic devices 101, 103, 105 and 107, based on the screen. For example, while the second external electronic device 107 is accommodated in the electronic device 103, the electronic device 101 may control the power outputted from the interface of the electronic device 103 and/or the battery to be transmitted to at least one of the first external electronic device 105 contacted with the side of the housing in which the coil of the electronic device 103 is disposed or the second external electronic device 107 contacted with another interface different from the interface of the electronic device 103. As an example, the electronic device 103 may transmit the power outputted from the battery to the second external electronic device 107 through the another interface.

The electronic device 101 according to an embodiment may transmit data on an audio being played in the electronic device 101 to the second external electronic device 107. For example, the data may be available in the second external electronic device 107 to output the audio from the second external electronic device 107. For example, the electronic device 101 may be referred to as a master device.

The first external electronic device 105 according to an embodiment may transmit at least one data to the electronic device 101, using at least one communication circuitry. The first external electronic device 105 may receive at least one data from the electronic device 101. For example, while the electronic device 101 transmits the data on the audio played in the electronic device 101 to the second external electronic device 107 through the communication link established between the second external electronic device 107 and the electronic device 101, the electronic device 101 may transmit the data on the audio played in the electronic device 101 to the first external electronic device 105 through the communication link established with the first external electronic device 105. The first external electronic device 105 may display the screen based on the data through the display of the first external electronic device 105. The electronic device 101 may display the screen including information related to (or the same as) the screen through the display of the electronic device 101.

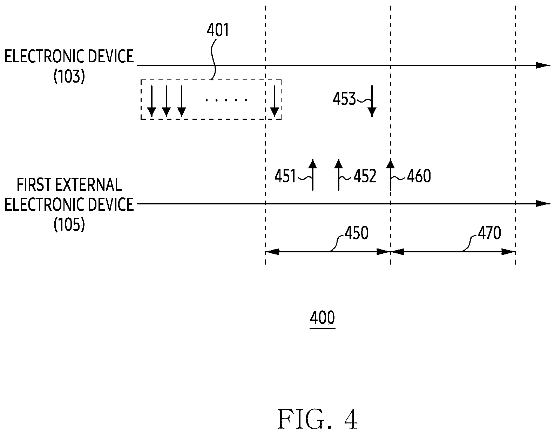

The first external electronic device 105 according to an embodiment may establish at least one communication link with the electronic device 103. The first external electronic device 105 may display, on the display, the screen including the data on the battery of the electronic device 103, based on the at least one communication link. The operation in which the first external electronic device 105 and the electronic device 103 establish at least one communication link will be described later in FIG. 4.

The second external electronic device 107 according to an embodiment may be configured with an earbud or a pair of earphones. As an example, the second external electronic device 107 may include a third external electronic device 107-1 and a fourth external electronic device 107-2. The third external electronic device 107-1 and the fourth external electronic device 107-2 may be configured with a pair. For example, the housing of the third external electronic device 107-1 may have a form that is attachable to and detachable from a left auricle of a user. For example, the housing of the fourth external electronic device 107-2 may have a form that is attachable to and detachable from a right auricle of the user. At least one of the third external electronic device 107-1 or the fourth external electronic device 107-2 may establish the communication link, using at least one communication circuitry with the electronic device 101, the electronic device 103, and/or the first external electronic device 105. As an example, the third external electronic device 107-1 may establish the communication link with the fourth external electronic device 107-2. Obtaining the data on the audio by the second external electronic device 107 through at least one communication link may include sniffing (or snooping). The sniffing may mean an operation in which the third external electronic device 107-1 accesses the communication link between other electronic devices (e.g., the electronic device 101 and the fourth external electronic device 107-2) and obtain the data transmitted or received through the communication link. The third external electronic device 107-1 may output at least some of the data on the obtained (or sniffed) audio as an audio signal. As an example, the communication link formed between the third external electronic device 107-1 and the fourth external electronic device 107-2 may be used for the third external electronic device 107-1 to receive the information for the obtaining (or sniffing) or the additional information on data on the audio. However, it is not limited thereto. For example, the second external electronic device 107 may output the data through a speaker of the second external electronic device 107, based on receiving the data on the audio from the electronic device 101. The second external electronic device 107 may output the audio through the speaker of the second external electronic device 107, based on receiving the data on the audio from the first external electronic device 105. For example, the second external electronic device 107 may be referred to as a slave device.

The first external electronic device 105 according to an embodiment may transmit the data on the audio played in the first external electronic device 105 to the second external electronic device 107 through the communication link established between the first external electronic device 105 and the second external electronic device 107. For example, the first external electronic device 105 may be referred to as the master device that is distinguished from the electronic device 101, which is the master device.

The electronic device 103 as described above may transmit the power to at least one of the first external electronic device 105 and the second external electronic device 107 wirelessly and/or by wire while maintaining the communication link with the first external electronic device 105. For example, the electronic device 103 may receive the signal for input for transmitting the power to the first external electronic device 105, using the display included in the first external electronic device 105. The electronic device 103 may transmit the power to the first external electronic device 105, based on receiving the signal for the input. Transmitting the power by the electronic device 103 or configurations for establishing a communication link with an external electronic device will be described later in FIG. 2.

FIG. 2 is a block diagram of an electronic device according to an embodiment. Referring to FIG. 2, an electronic device 103 according to an embodiment may include at least one of a processor 203, memory 205, a battery 260, a sensor 210, a first interface 225, a second interface 230, a coil 240, or a communication circuitry 250. The processor 203, the memory 205, the battery 260, the sensor 210, the first interface 225, the second interface 230, and the coil 240 may be electronically and/or operably coupled with each other by an electronical component such as a communication bus. A type and/or the number of a hardware component included in the electronic device 103 are not limited to those illustrated in FIG. 2. For example, the electronic device 103 may include only a part of the hardware component illustrated in FIG. 2. As an example, the electronic device 103 may be configured with the processor 203, the memory 205, the sensor 210, the first interface 225, the second interface 230, the coil 240, the communication circuitry 250, and the battery 260.

The processor 203 of the electronic device 103 according to an embodiment may include the hardware component for processing data based on one or more instructions. For example, the hardware component for processing the data may include an arithmetic and logic unit (ALU), a field programmable gate array (FPGA), and/or a central processing unit (CPU). The number of the processor 203 may be one or more. For example, the processor 203 may have a structure of a multi-core processor such as a dual core, a quad core, or a hexa core.

The processor 203 according to an embodiment may include a power management integrated circuit (PMIC) and/or an integrated circuit (IC). For example, the PMIC may be mounted in the integrated circuit or a system on chip (SoC) semiconductor. For example, the PMIC may include the charging IC. For example, the PMIC may include identification information of the electronic device 103. As an example, the charging IC may include the charging IC for a wireless charging method. For example, the wireless charging method may include at least one of a magnetic resonance method, a magnetic induction method, and an electromagnetic wave method.

The memory 205 of the electronic device 103 according to an embodiment may include the hardware component for storing the data and/or an instruction inputted to or outputted from the processor 203. For example, the memory 205 may include volatile memory such as random-access memory (RAM) and/or non-volatile memory such as read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, hard disk, compact disk, and embedded multi media card (eMMC).

In the memory 205 of the electronic device 103 according to an embodiment, one or more instructions indicating an operation to be performed by the processor 203 on the data may be stored. A set of the instructions may be referred to as firmware, an operating system, a process, a routine, a sub-routine and/or an application. For example, the electronic device 103 and/or the processor 203 of the electronic device 103 may perform at least one of the operations of FIG. 3 to FIG. 10 by executing the set of a plurality of instructions distributed in a form of the application.

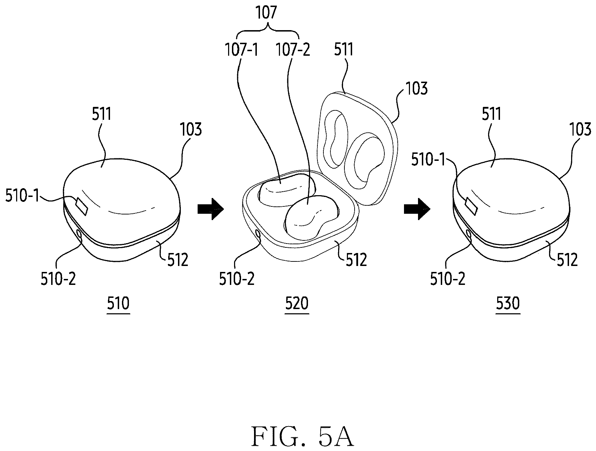

The sensor 210 of the electronic device 103 according to an embodiment may detect an operating state (e.g., power or temperature) of the electronic device 103 or an external environmental state (e.g., a state in which an external electronic device 201 is contacted) and generate an electrical signal or a data value corresponding to the sensed state. For example, the sensor 210 may include at least one hall sensor. For example, the hall sensor may include one or more magnets and/or one or more magnetic sensors. At least one of the one or more magnets or the one or more magnetic sensors included in the hall sensor may be disposed at different positions in the electronic device 103. A positional relationship of the one or more magnets and/or the one or more magnetic sensors in the electronic device 103 may be changed according to the form of the electronic device 103. The electronic device 103 may measure a change in the positional relationship through the one or more magnetic sensors. The change in the positional relationship may cause the change in a magnetic field formed by the one or more magnets. The electronic device 103 may obtain power indicating the change in the magnetic field, using the hall sensor. For example, the electronic device 103 may include a first housing and a second housing coupled to each other by a hinge. The electronic device 103 may identify contact between the first housing and the second housing based on a magnetic material included in the first housing and the second housing. The operation of identifying the contact by the electronic device 103 will be described later in FIG. 5A. The electronic device 103 may identify at least one external electronic device 201 contacted with the housing of the electronic device 103, using a hall sensor. However, embodiments are not limited thereto.

The interfaces 225 and 230 of the electronic device 103 according to an embodiment may support one or more designated protocols that may be used for the electronic device 103 to be connected to the external electronic device 201 by wire or wirelessly. For example, interfaces 225 and 230 may include a high definition multimedia interface (HDMI), a universal serial bus (USB), an SD card interface, a charging interface or an audio interface for transmitting the power to the external electronic device (e.g., the second external electronic device 107 of FIG. 1). The interfaces 225 and 230 according to an embodiment may include a connecting terminal. For example, the electronic device 103 may include a connector that may be physically connected to the external electronic device 201 through the connecting terminal. For example, the electronic device 103 may establish a connection with a cable by using the first interface 225. The electronic device 103 may receive the power by wire based on the established connection. For example, the electronic device 103 may establish the connection with an external electronic device (e.g., the second external electronic device 107 of FIG. 1) by wire using the second interface 230. For example, the electronic device 103 may transmit the power outputted from the first interface 225 and/or the battery 260 to the external electronic device through the second interface 230. As an example, the second interface 230 may include one of a detect interface, a charging interface, a data communication interface, or a ground (GND) interface that identifies the contact of the external electronic device (e.g., the second external electronic device 107 of FIG. 1).

The coil 240 of the electronic device 103 according to an embodiment may include the magnetic material. The magnetic material may be an example of a material configured to have magnetic resistance. For example, the coil 240 may be disposed in at least one charging area or at least a partial area of at least one charging area of the electronic device 103. For example, at least one of the charging area or the partial area may be implemented so that the power may be transmitted independently of an orientation in which at least one electronic device (e.g., the external electronic device 210) is placed. At least one of the charging areas and the partial area may be included in one surface of the housing of the electronic device 103. The electronic device 103 may identify the external electronic device 201 contacted with the one surface of the housing. The electronic device 103 may transmit the power to the identified external electronic device 201, using the coil 240.

The communication circuitry 250 of the electronic device 103 according to an embodiment may include the hardware component for supporting transmission and/or reception of the electrical signal between the electronic device 103 and the external electronic device. For example, the communication circuitry 250 may include at least one of a modem (MODEM), an antenna, and an optic/electronic (O/E) converter. The communication circuitry 250 may support the transmission and/or reception of the electrical signal, based on a various type of a protocol such as ethernet, a local area network (LAN), a wide area network (WAN), wireless fidelity (WiFi), Bluetooth, bluetooth low energy (BLE), ZigBee, long term evolution (LTE), and a 5G new radio (NR). For example, the electronic device 103 may wirelessly establish a communication link with the external electronic device 201, using the communication circuitry 250. The electronic device 103 may transmit and/or receive data with the external electronic device 201, based on the communication link. For example, the data may include information for selectively transmitting the power to either the battery 260 or the external electronic device 201.

The battery 260 of the electronic device 103 according to an embodiment may output, from chemical energy, electrical energy (or the power) to be consumed in another circuitry and/or the hardware components in the electronic device 103. For example, the battery 260 of the electronic device 103 may include a battery cell, a battery module, or a battery pack. The battery 260 may include a capacitor or a secondary battery that stores the power by charging. For example, the battery 260 may be any one of a lithium ion battery (Li-ion), a lithium ion polymer battery (Li-ion polymer), a lead storage battery, a nickel-cadmium battery (NiCd), or a nickel hydrogen storage battery (NiMH). For example, the battery 260 of the electronic device 103 may be charged by the power received from at least one of the coil 240 or the first interface 225.

An exemplary situation in which the electronic device 103 and the external electronic device 201 according to an embodiment are connected to each other based on a wired network and/or a wireless network is illustrated. The wired network may include the Internet, the local area network (LAN), the wide area network (WAN), the ethernet or the network such as a combination thereof. The wireless network may include the long term evolution (LTE), the 5g new radio (NR), the wireless fidelity (WiFi), the Zigbee, a near field communication (NFC), the Bluetooth, the bluetooth low-energy (BLE), or a combination thereof. Although the electronic device 103 and the external electronic device 201 are illustrated to be directly connected, the electronic device 103 and the external electronic device 201 may be indirectly connected through one or more routers and/or an access point (AP).

The first external electronic device 201 according to an embodiment may include at least one display 220. The display 220 may output visualized information to a user. For example, the display 220 may be controlled by a controller such as a processor and/or a graphic processing unit (GPU) and may output the visualized information to the user. The display may include a flat panel display (FPD), and/or electronic paper. The FPD may include a liquid crystal display (LCD), a plasma display panel (PDP), and/or one or more light emitting diodes (LEDs). The LED may include an organic LED (OLED).

The external electronic device 201 according to an embodiment may include the electronic device 101 of FIG. 1, the first external electronic device 105 of FIG. 1, and/or the external electronic device 107 of FIG. 1. For example, in case that the electronic device 103 is referred to as the electronic device 101 of FIG. 1, the external electronic device 201 may be referred to as at least one of the electronic device 103, the first external electronic device 105 of FIG. 1, or the second external electronic device 107 of FIG. 1. As an example, in case that the electronic device 103 is referred to as the first external electronic device 105, the external electronic device 201 may be referred to as at least one of the electronic device 103 of FIG. 1 or the second external electronic device 107 of FIG. 1.

The electronic device 103 as described above may transmit the power outputted from the battery 260 and/or the first interface 225 to the external electronic device 201, using the coil 240 while establishing the communication link, using the external electronic device 201 and the communication circuit 250. In case that the plurality of external electronic devices is present, the electronic device 103 may selectively transmit the power to one of the plurality of the external electronic devices, using the display of the external electronic device 201 for the transmission.

FIG. 3 is an exemplary diagram to describe transmitting or receiving power by an electronic device according to an embodiment. Referring to FIG. 3, a state 300 may include an electronic device 103, a first external electronic device 105, and a cable 310. The electronic device 103 may be referred to the electronic device 103 of FIG. 1. The first external electronic device 105 may correspond to the external electronic device 105 of FIG. 1. Coils 351 and 352 may be included in the coil 240 of FIG. 2. For example, the state 300 may include a first state in which the electronic device 103 receives the power by wire, using the cable (e.g., a travel adapter (TA)) 310, based on at least one interface (e.g., the first interface 225 of FIG. 2). For example, in the state 300, a second state different from the first state may include another state in which a connection between the electronic device 103 and the cable 310 is not established. For example, the electronic device 103 may include at least one external electronic device (e.g., the second external electronic device 107 of FIG. 1) in the state 300.

The coils 351 and 352 according to an embodiment may be referred to at least one of a transmission coil, a reception coil, or a combined coil that combines a transmission function and a reception function. For example, the electronic device 103 may transmit the power outputted from at least one of a battery (e.g., the battery 260 of FIG. 2) and/or an interface (e.g., the first interface 225 of FIG. 2) to the first external electronic device 105, using the transmission coil. As an example, the outputted power may cause induced power to the coil 351 included in the first external electronic device 105, based on being received by the coil 352. For example, the first external electronic device 105 may receive the power from at least one external electronic device (e.g., the electronic device 103), using the reception coil (e.g., coil 351). As an example, the power may mean AC power. The first external electronic device 105 may charge the battery of the first external electronic device 105, based on the received power.

The coils 351 and 352 according to an embodiment may include a ferromagnetic body 353 and 354, respectively. For example, the coil 351 may include the ferromagnetic body 353. For example, the coil 352 may include the ferromagnetic body 354. One surface (e.g., center of one surface) on which the coil 352 of the electronic device 103 is disposed and one surface (e.g., center of one surface) on which the coil 351 of the first external electronic device 105 is disposed may be in contact, based on the ferromagnetic body 353 and 354. For example, the ferromagnetic body 353 and 354 may be an example of a material generating a magnetic field. Based on the magnetic field, the one surface of the electronic device 103 and the one surface of the first external electronic device 105 may be in contact. For example, the one surface of the electronic device 103 and the one surface of the first external electronic device 105, contacted, based on the ferromagnetic body 353 and 354, may be substantially parallel. For example, the one surface of the electronic device 103 may be formed in a groove structure (e.g., a step structure) corresponding to the one surface of the first external electronic device 105. As an example, based on the groove structure, movement of the contacted one surface of the electronic device 103 and the one surface of the first external electronic device 105 may be minimized. According to an embodiment, one surface (e.g., center of one surface) on which the coil 352 of the electronic device 103 is disposed and the groove structure (e.g., a step structure) corresponding to the one surface may be formed in a structure corresponding to one surface on which the coil of a wireless charging electronic device (not illustrated) for charging the first external electronic device 105 is disposed. For example, based on the ferromagnetic body 353 and 354 and the groove structure, the movement of one surface of the electronic device 103 and one surface of the wireless charging electronic device may be minimized.

According to an embodiment, the electronic device 103 and the first external electronic device 105 may transmit and/or receive AC power having a different frequency by using each of a plurality of transmission and/or reception coils. The electronic device 103 and the first external electronic device 105 may differently adjust LC resonance characteristic for each of the plurality of transmission and/or reception coils. A method in which the electronic device 103 and/or the first external electronic device 105 according to an embodiment transmits and/or receives the power, using the coils 351 and 352 may include at least one of a magnetic induction method, an electromagnetic resonance method, and an RF wireless power transmission method.

The electronic device 103 according to an embodiment may identify a contact of the first external electronic device 105 in the state 300. For example, the electronic device 103 may identify a change in the magnetic field, based on either the coil 352 or a sensor (e.g., the sensor 210 of FIG. 2). The electronic device 103 may identify the contact of the first external electronic device 105, based on the change in the magnetic field. According to an embodiment, the electronic device 103 may continuously transmit an identification signal including identification information (e.g., identification information included in the PMIC) to the first external electronic device 105 in the first state. As an example, the first external electronic device 105 in which the identification signal is received may transmit an authentication signal to the electronic device 103. For example, in case that the wireless charging is compatible with the first external electronic device 105, the electronic device 103 may transmit the power to the first external electronic device 105. For example, in case of identifying a preset event in the second state, the electronic device 103 may transmit the identification information to the first external electronic device 105. According to an embodiment, the electronic device 103 may identify the first external electronic device 105, based on at least one communication circuitry in the state 300. An operation in which the electronic device 103 identifies the first external electronic device 105, based on at least one communication circuitry will be described later in FIG. 4.

The electronic device 103 according to an embodiment may transmit the power received through at least one interface (e.g., the first interface 225 of FIG. 2) to the battery and/or the first external electronic device 105, using the cable 310, in the first state (e.g., the first state of the state 300). For example, in case of transmitting the received power to the battery (e.g., the battery 260 of FIG. 2), the electronic device 103 may perform at least one of boosting or bucking of the power, based on at least one of a constant current (CC) interval or a constant voltage (CV) interval. The CC interval may be an example of the interval in which the electronic device 103 provides the power to the battery based on a constant current. The CV interval may be the interval in which the electronic device 103 provides charging power to the battery based on a constant voltage. For example, in case of transmitting the power received through the cable 310 to the first external electronic device 105, the electronic device 103 may transmit the power to the coil 352. The electronic device 103 may cause induced power to the coil 351 of the first external electronic device 105, based on the power transmitted to the coil 352. The first external electronic device 105 may charge the battery of the first external electronic device 105, based on the induced power. For example, in the state 300, the electronic device 103 may simultaneously transmit the power outputted from the interface to the battery and the first external electronic device 105. For example, in the first state, the electronic device 103 may transmit the power outputted from the battery to the first external electronic device 105 while transmitting the power outputted from the interface to the battery. As an example, in the first state, the electronic device 103 may transmit, to the battery of the first external electronic device 105 or the battery, power outputted from the interface, during a first time interval within a period. In the first state, the electronic device 103 may transmit, to the external electronic device 105 of the external electronic device 105 or the battery, the power outputted from the interface, during a second time interval within the period.

Although not illustrated, the electronic device 103 according to an embodiment may wirelessly receive the power from a wireless charging electronic device (not illustrated) independently of receiving the power from the cable 310 by wire, based on the coil 352. The electronic device 103 may charge the battery, based on the wirelessly received power. The wireless charging electronic device may be referred to as an electronic device for charging the first external electronic device 105. The wireless charging electronic device may be referred to as the electronic device for charging the first external electronic device 105. The wireless charging electronic device may be an example of the electronic device that transmits the power, based on a wireless charging standard (e.g., Qi, or a power matters alliance (PMA)) compatible with the electronic device 103 and/or the first external electronic device 105.

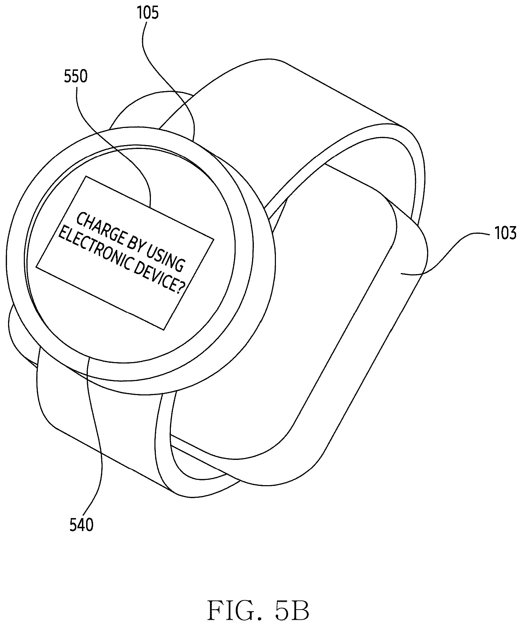

In the first state, the electronic device 103 according to an embodiment may transmit the power outputted from the interface to at least one of the battery or the first external electronic device 105, based on at least one input. The at least one input may be received, based on a display (e.g., the display 220 of FIG. 2) included in the first external electronic device 105. The first external electronic device 105 may display a user interface configured to control the power through the display. The first external electronic device 105 may transmit the received input, based on the user interface, to the electronic device 103, based on the communication circuitry. An operation in which the first external electronic device 105 displays a user interface (or a screen) will be described later in FIGS. 5B to 6.

In the second state, the electronic device 103 according to an embodiment, based on a state of charge (SOC) of the battery, may transmit the power to the first external electronic device 105. For example, the electronic device 103 may stop transmitting the power in case that the SOC of the battery is reduced to less than or equal to a preset critical value (e.g., 20%). The electronic device 103 may stop the transmission, based on the SOC of the external electronic device (e.g., the second external electronic device 107 of FIG. 1) different from the first external electronic device 105. As an example, in case that the SOC of the first external electronic device 105 is 100%, the electronic device 103 may stop the transmission. According to an embodiment, the electronic device 103 may adjust the preset critical value of the battery for stopping the transmission. For example, in case that the SOC of the battery is reduced to less than or equal to 10%, the electronic device 103 may stop the transmission. For example, the preset critical value may be adjusted, based on the battery capacity of the different external electronic devices. The electronic device 103 according to an embodiment may request the first external electronic device 105 to display a screen including the information on the SOC of the battery in case that the SOC of the battery is less than or equal to a preset value from the preset critical value. As an example, the screen may include the information for notifying that the transmission of the power is stopped in case that the SOC of the battery matches the critical value.

The electronic device 103 according to an embodiment may stop the transmission, based on the SOC of the first external electronic device 105. As an example, the SOC of the first external electronic device 105 for the electronic device 103 to stop the transmission may be 100%. For example, in the second state, the electronic device 103 may display the screen for initiating transmission of the power to the first external electronic device 105, based on the SOC of the battery, through the display of the first external electronic device 105. For example, the screen displayed through the display of the first external electronic device 105 may display the information on the SOC of the electronic device 103.

The electronic device 103 according to an embodiment may establish a near field communication link (e.g., an inband communication) with the first external electronic device 105 contacted with a side of the housing of the electronic device 103, using the coil 352. The electronic device 103 may transmit various state information including strength of the power, using the near field communication link. For example, an operation of performing modulation based on an amplitude shift keying (ASK) modulation method and/or a frequency shift keying (FSK) modulation method may be understood as the operation of transmitting data (or packets) according to the inband communication method, and the operation of performing demodulation based on the ASK demodulation method and/or the FSK demodulation method may be understood as the operation of receiving the data (or packets) according to the inband communication method. The electronic device 103 may establish the communication link (e.g., the bluetooth low energy (BLE), the near field communication (NFC), and an out of band communication) based on the communication circuitry (e.g., the communication circuitry 250 of FIG. 2), independently of the near field communication using the coil 352. At least one method of the communication link or the near field communication link established based on the communication circuitry may include at least one of a pulse width modulation method, a frequency modulation method, a phase modulation method, an amplitude modulation method, or an amplitude and a phase modulation method. An operation for the electronic device 103 and the first external electronic device 105 to establish the different communication links will be described later in FIG. 4.

FIG. 4 is an exemplary diagram in which an electronic device according to an embodiment transmits a signal for establishing a communication link with an external electronic device. Referring to FIG. 4, an exemplary graph 400 indicating the signal transmitted and/or received by an electronic device 103 and a first external electronic device 105 to establish at least one communication link is illustrated. The electronic device 103 may be referred to the electronic device 103 of FIG. 1. The first external electronic device 105 may be referred to the first external electronic device 105 of FIG. 1.

The electronic device 103 and/or the first external electronic device 105 according to an embodiment may establish the communication link (e.g., a BLE communication link, an NFC communication link), using at least one communication circuitry (e.g., the communication circuitry 250 of FIG. 2). For example, the electronic device 103 may transmit or broadcast a data signal 401 in a state (e.g., the first of the state 300 of FIG. 3) of receiving power from at least one interface (e.g., the first interface 225 of FIG. 1) using a cable (e.g., the cable 310 of FIG. 3) to the electronic device 103. For example, the electronic device 103 may repeatedly transmit the data signal 401. For example, the electronic device 103 may periodically transmit the data signal 401 in the state. For example, the electronic device 103 and/or a processor (e.g., the processor 203 of FIG. 2) may adjust the period. The electronic device 103 may identify the first external electronic device 105 that has received the data signal 401 in the state. The data signal 401 may be an example of an advertising signal and/or a broadcast signal for the electronic device 103 to scan at least one external electronic device (e.g., the first external electronic device 105).

The data signal 401 according to an embodiment may include information of the electronic device 103. For example, the information of the electronic device 103 may include one of identification information of the electronic device 103, user information of the electronic device 103, information on whether the electronic device different from the first external electronic device 105 and the communication link are established, information on a time interval that may be connected to the electronic device 103, or battery status information (e.g., SOC). The identification information may include at least one of a vendor of the electronic device 103, a type (e.g., a cradle for charging an earbud), or a media access control (MAC) address assigned to the electronic device 103. As an example, the data signal 401 may include the information for indicating the length of the scanning interval 450 in which a connection signal (e.g., a connection signal 452) is to be transmitted from the first external electronic device 105. The first external electronic device 105 that has received the data signal 401 may transmit, during the connectable time interval (e.g., a scan interval 450), to the electronic device 103, the data signal 451.

The electronic device 103 according to an embodiment may receive the data signal 451 from the first external electronic device 105 during the scan period 450. The electronic device 103 may identify the first external electronic device 105, based on the data signal 451. The data signal 451 may include the information of the first external electronic device 105. The information may include one of the identification information of the first external electronic device 105, the user information of the first external electronic device 105, the information on whether the electronic device (e.g., the second external electronic device 107 of FIG. 1) different from the electronic device 103 and the communication link are established, or the battery status information (e.g., SOC) of the first external electronic device 105. The identification information may include at least one of the vendor of the first external electronic device 105, the type (e.g., the smart watch) of the first external electronic device 105, or a MAC address assigned to the first external electronic device 105.

The first external electronic device 105 according to an embodiment may transmit the connection signal 452 to the electronic device 103 to establish the communication link with the electronic device 103. The electronic device 103 may receive the connection signal 452 from the first external electronic device 105. In order to transmit the connection signal 452, the first external electronic device 105 may display at least one screen for receiving at least one input on a display. The first external electronic device 105 may transmit the connection signal 452 to the electronic device 103, based on receiving the at least one input, using the at least one screen. For example, the electronic device 103 may transmit a connection signal 453 to the first external electronic device 105, based on receiving the connection signal 452. The electronic device 103 may establish the communication link with the first external electronic device 105 based on transmitting the connection signal 453. As an example, the electronic device 103 may establish the communication link with the first external electronic device 105, in response to receiving the connection signal 452, independently of transmission of the connection signal 453. For example, the connection signals 452 and 453 may be 'CONNECT IND' of a bluetooth core specification. However, it is not limited thereto.

The electronic device 103 according to an embodiment may receive at least one input signal (e.g., an input signal 460) from the first external electronic device 105 while the communication link with the first external electronic device 105 is maintained. For example, in response to transmitting the input signal 460 from the first external electronic device 105, the electronic device 103 may transmit the power outputted from the interface (e.g., the first interface 225 of FIG. 2) of the electronic device 103 to the first external electronic device 105. Based on the transmitted power, the first external electronic device 105 may charge the battery of the first external electronic device 105. The electronic device 103 may transmit at least one signal to the first external electronic device 105 in a connection interval 470. The connection interval 470 may include the interval for charging the battery. As an example, the connection interval 470 may be an example of the interval in which the battery of the electronic device (e.g., the second external electronic device 107 of FIG. 1) different from the first external electronic device 105 is charged. The input signal 460 may be an example of the signal corresponding to the input of touching a screen displayed from the display (e.g., the display 220 of FIG. 2) of the first external electronic device 105. For example, the input signal 460 may include the information that requests electronic device 103 to transmit the power (e.g., the power output from the interface) to the electronic device (e.g., the first external device 105 and/or the second external electronic device 107) different from electronic device 103. An operation in which the first external electronic device 105 displays the screen through the display will be described later in FIGS. 5B to 6.

The first external electronic device 105 according to an embodiment may establish a communication link different from the communication link with an electronic device (e.g., the second external electronic device 107 of FIG. 1) different from the electronic device 103 while the communication link with the electronic device 103 is maintained. The first external electronic device 105 may display the information of the electronic device 103 and/or the different electronic device (e.g., the second external electronic device 107 of FIG. 1) through the display. The information may include the SOC of the electronic device 103 and/or the different electronic device (e.g., the second external electronic device 107 of FIG. 1). For example, while maintaining the communication link with the electronic device 103, the first external electronic device 105 may transmit data on an audio played in the first external electronic device 105 to the different electronic device.

The electronic device 103 according to an embodiment may transmit the signal including the information (e.g., SOC) on the battery of the electronic device 103 to the first external electronic device 105 while maintaining the communication link with the first external electronic device 105. Based on receiving the signal, the first external electronic device 105 may display the screen including the information on the battery through the display of the first external electronic device 105. While maintaining the communication link, in the state, the electronic device 103 may transmit the power outputted from the battery of the electronic device 103 to the first external electronic device 105. For example, the electronic device 103 may transmit the power to the first external electronic device 105, based on the preset data, independently of receiving the input signal 460. The preset data may be an example of the data stored in memory (e.g., the memory 205 of FIG. 2) to transmit the power to the first external electronic device 105, in case that the electronic device 103 identifies the first external electronic device 105.

The electronic device 103 according to an embodiment may identify the first external electronic device 105, based on at least one coil (e.g., the coil 240 of FIG. 2 and/or the sensor (e.g., sensor 210 of FIG. 2), in the state (e.g., the second state of the state 300 of FIG. 3) of not receiving the power by wire, using the cable (e.g., the cable 310 of FIG. 3). For example, the electronic device 103 may transmit the data signal 401, based on a preset event. The information on the preset event will be described later in FIGS. 5A to 5B.

The electronic device 103 as described above may establish the communication link with the first external electronic device 105, using the communication circuitry. The electronic device 103 may transmit at least one signal to the first external electronic device 105 while maintaining the communication link. While maintaining the communication link, the first external electronic device 105 may display at least one screen through the display (e.g., the display 220 of FIG. 2) of the first external electronic device 105, based on receiving the at least one signal. Based on the screen, the first external electronic device 105 may identify the input requesting to transmit the power to at least one of the first external electronic device 105 or the external electronic device (e.g., the second external electronic device 107 of FIG. 1) different from the first external electronic device 105. The first external electronic device 105 may transmit the signal (e.g., the input signal 460) different from the at least one signal to the electronic device 103, based on identifying the input. The electronic device 103 may transmit the power to one of the first external electronic device 105 or the external electronic device, based on receiving the different signal.

FIG. 5A to 5B are an exemplary drawing for describing a preset event, using at least one of an electronic device or an external electronic device according to an embodiment. Referring to FIG. 5A, states 510, 520, and 530 may include an electronic device 103 and/or a second external electronic device 107. The states 510, 520, and 530 may be referred to the state (e.g., the second state of the state 300 of FIG. 3) in which the electronic device does not receive power, using a cable (e.g., the cable 310 of FIG. 3). The electronic device 103 may be referred to the electronic device 103 of FIG. 1. The electronic device 103 may include a first housing 511 and a second housing 512. For example, the first housing 511 and/or the second housing 512 may include at least one coil (e.g., the coil 240 of FIG. 2). As an example, a side on which the coil of the first housing 511 and/or the second housing 512 is disposed may be formed to match a side of the housing on which at least one coil of a first external electronic device 105 is disposed to contact with the first external electronic device 105. As an example, the side on which the coil of at least one of the first housing 511 or the second housing 512 is disposed may be formed to fit the side of the housing of the first external electronic device 105.

The state 510 according to an embodiment may mean the state in which the side of the first housing 511 and the side of the second housing 512 are in contact with each other. The state 510 may be referred to as a closed state. For example, the state 510 may be substantially the same as the state 530. For example, the electronic device 103 may include at least one magnetic material on the side of the first housing 511 and/or the side of the second housing 512. The electronic device 103 may maintain the closed state, based on the at least one magnetic material of the first housing 511 and the second housing 512. The electronic device 103 may identify the contact between the first housing 511 and the second housing 512 through at least one sensor (e.g., the sensor 210 of FIG. 2).

The electronic device 103 according to an embodiment may include a hinge in contact with one end of the first housing 511 and one end of the second housing 512. For example, referring to FIG. 5A, the state 520 may mean the state in which the inside of the first housing 511 and/or the second housing 512 of the electronic device 103 is exposed, based on the hinge. The state 520 may be referred to as an open state. The electronic device 103 may identify the state 520 based on at least one sensor (e.g., the sensor 210 of FIG. 2). As an example, the electronic device 103, using the sensor, may distinguish the state 510 and/or the state 520, based on identifying a change in magnetism.

The side of the first housing 511 and/or the side of the second housing 512 according to an embodiment may include a part for accommodating the second external electronic device 107. The part may be formed to accommodate the second external electronic device 107. The electronic device 103 may include a connecting terminal (e.g., the connecting terminal included in the second interface 230 of FIG. 2) for connecting by wire with the second external electronic device 107 in the part. The electronic device 103 may transmit the power outputted from an interface (e.g., the first interface 225 of FIG. 2) and/or the battery (e.g., the battery 260 of FIG. 2) through the connecting terminal. The second external electronic device 107 may charge the battery of the second external electronic device (e.g., the second external electronic device 107 of FIG. 1), based on receiving the transmitted power.

The electronic device 103 according to an embodiment may identify the state 510 and the state 520, based on at least one sensor. The electronic device 103 may identify a first gesture that changes from the state 510 to the state 520. As an example, the electronic device 103 may identify the change in the magnetism, based on the magnetic material included in the first housing 511 and the second housing 512, through the sensor (e.g., the sensor 210 of FIG. 2). The electronic device 103 may distinguish the state 510 and/or the state 520, based on the identified change in the magnetism. The electronic device 103 may identify the first gesture, based on the distinction. For example, the electronic device 103 may identify a second gesture that changes from the state 520 to the state 530, based on the sensor. For example, the electronic device 103 may identify the second gesture, based on identifying the change in the magnetism different from the change in the magnetism caused by the first gesture, using at least one sensor. For example, the electronic device 103 may identify the first gesture and the second gesture as one event. The electronic device 103 may transmit a data signal (e.g., the data signal 401 of FIG. 4), based on the event. For example, the electronic device 103 may transmit the data signal for a preset time (e.g., 5 seconds), based on identifying (or number of the event) the event. As an example, the electronic device 103 may transmit the data signal, based on identifying the event performed based on a preset number of times (e.g., twice). The electronic device 103 may establish at least one communication link with at least one external electronic device (e.g., the external electronic device 105 of FIG. 1) that has received the transmitted data signal. For example, the electronic device 103 may transmit the power outputted from the battery of the electronic device 103 to the at least one external electronic device, based on identifying the contact (e.g., the contact of the ferromagnetic material) of the at least one external electronic device (e.g., the first external electronic device 105 of FIG. 1), while maintaining at least one communication link with at least one external electronic device (e.g., the first external electronic device 105 of FIG. 1).

The electronic device 103 according to an embodiment may include at least one button 510-1. The electronic device 103 may receive the event of clicking and/or touching the button 510-1. For example, the electronic device 103 may transmit the data signal (e.g., the data signal 401 of FIG. 4), based on the received event. For example, the electronic device 103 may transmit the power outputted from the battery of the electronic device 103 to the at least one external electronic device, based on the received input while maintaining at least one communication link with at least one external electronic device (e.g., the first external electronic device 105 of FIG. 1).

The electronic device 103 according to an embodiment may include at least one LED 510-2. For example, the electronic device 103 may indicate a SOC of the electronic device 103 and/or a SOC of the second external electronic device 107, using the LED 510-2. As an example, the electronic device 103 may be connected with the second external electronic device 107 by wire through at least one interface (e.g., the second interface 230 of FIG. 2). The electronic device 103 may identify the data on the SOC of the second external electronic device 107, through the at least one interface. Based on the identified data, the electronic device 103 may indicate the SOC of the second external electronic device 107, using the LED 510-2. As an example, in case that the LED 510-2 is a first color (e.g., red), it may mean the case that the SOC of the electronic device 103 and/or the SOC of the second external electronic device 107 are less than 20%. For example, in case that the LED 510-2 is a second color (e.g., green), it may mean the case that the SOC of the electronic device 103 and/or the SOC of the second external electronic device 107 are 100%.

Referring to FIG. 5B, the first external electronic device 105 contacted with the side of the housing of the electronic device 103 according to an embodiment may include a display 540. The electronic device 103 may be referred to the electronic device 103 of FIG. 1. The first external electronic device 105 may be referred to the first external electronic device 105 of FIG. 1. The display 540 may be referred to the display 220 of FIG. 2. The electronic device 103 and/or the first external electronic device 105 may be included in the state 300 (e.g., the second state) of FIG. 3. For example, at least one of a transmission coil, a reception coil, or a transmission/reception coil may be disposed on the side of the housing of the first external electronic device 105 contacted with the electronic device 103. For example, at least one of the transmission coil, the reception coil, or the transmission/reception coil may be disposed on the side of the housing of the electronic device 103.

The electronic device 103 according to an embodiment may transmit the data signal (e.g., the data signal 401 of FIG. 4), in the state (e.g., the second state included in the state 300 of FIG. 3) in which the connection with at least one cable (e.g., the cable 310 of FIG. 3) has not been established. The first external electronic device 105 may receive the data signal from the electronic device 103. The data signal may include information on a screen 550. The screen 550 may be an example of the displayed screen, based on at least one application stored in memory (e.g., the memory 205 of FIG. 2) of the first external electronic device 105. The screen 550 may include the information requesting to transmit the power from the electronic device 103 to the first external electronic device 105. For example, the first external electronic device 105 may identify the event corresponding to at least one input, based on the screen 550. The at least one input may be an example of a user input that allows the transmission of the power. For example, the first external electronic device 105 may transmit at least one signal to the electronic device 103, based on identifying the event. For example, the at least one signal may include at least one of the data signal 451 of FIG. 4, the connection signal 452 of FIG. 4, or the input signal 460. The electronic device 103 may initiate the transmission of the power outputted from the battery (e.g., the battery 260 of FIG. 2) of the electronic device 103, in the state, based on receiving the at least one signal (e.g., at least one of the data signal 451 of FIG. 4, the connection signal 452 of FIG. 4, or the input signal 460).

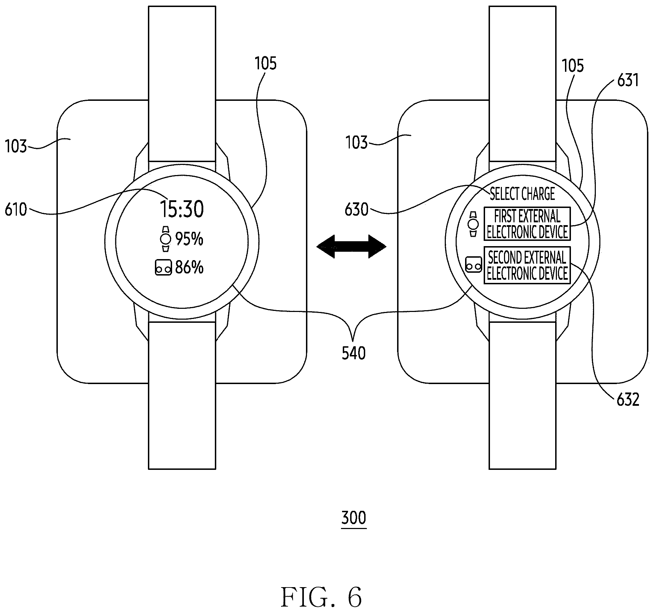

As described above, while the electronic device 103 according to an embodiment does not receive the power, using the cable, the electronic device 103 may transmit the power outputted from the battery of the electronic device 103 to the first external electronic device 105contacted with the electronic device 103. For example, the electronic device 103 may establish the communication link with the first external electronic device 105. The electronic device 103 may receive, from the first external electronic device 105, the signal (e.g., the input signal 460 of FIG. 4) for transmission to one of the first external electronic device 105 or the electronic device (e.g., the second external electronic device 107 of FIG. 1) different from the first external electronic device 105, based on the established communication link. The electronic device 103 may transmit the power to at least one of the first external electronic device 105 or the different electronic device, based on the received signal. In FIG. 6, an operation in which the first external electronic device 105 receives the input for selecting one of the first external electronic device 105 or the different electronic device through the display and transmits the signal for the received input to the electronic device 103 will be described later.

FIG. 6 is an exemplary diagram of a screen in which an electronic device according to an embodiment displays charging information through a display. Referring to FIG. 6, a state 300 may be referred to the state 300 of FIG. 3. A first state of the state 300 may mean a state in which the electronic device 103 establishes a connection with a cable (e.g., the cable 310 of FIG. 3) through a first interface (e.g., the first interface 225 of FIG. 2), and receives power by wire. A second state of the state 300 may mean a state in which the connection between the electronic device 103 and the cable (e.g., the cable 310 of FIG. 3) is not established. The state 300 may include the electronic device 103 and/or a first external electronic device 105. The electronic device 103 may be referred to the electronic device 103 of FIG. 1. The first external electronic device 105 may be referred to the first external electronic device 105 of FIG. 1. The electronic device 103 may include at least one electronic device (e.g., the second external electronic device 107 of FIG. 1). A display 540 may correspond to the display 540 of FIG. 5B. The state 300 may include the first state in which the electronic device 103 establishes the connection with at least one cable (e.g., cable 310 of FIG. 3), and receives the power by wire, and a second state in which the connection with the cable different from the first state is not established.

The electronic device 103 according to an embodiment may establish at least one communication link with the first external electronic device 105 in the state 300. The electronic device 103 may receive at least one signal (e.g., the connection signal 453 of FIG. 4) from the first external electronic device 105 while maintaining the communication link. The electronic device 103 may transmit at least one signal to the first external electronic device 105 while maintaining the communication link. At least one of the transmitted signal or the received signal may include the information of the electronic device 103 and/or the first external electronic device 105. The information may include one of the identification information of the first external electronic device 105 and/or the electronic device 103, or the information (e.g., SOC) on a battery of the electronic device 103 and/or the first external electronic device 105.

The electronic device 103 according to an embodiment may transmit, to the first external electronic device 105, the signal including the information on the battery (e.g., the battery 260 of FIG. 2) of the electronic device 103 and/or the information on the battery of at least one external electronic device (e.g., the second external electronic device 107 of FIG. 1) that may be accommodated in the electronic device 103, while maintaining at least one communication link with the first external electronic device 105. For example, the first external electronic device 105 may display the screen 610 through the display 540, based on receiving the signal. The screen 610 may include the information of the at least one external electronic device (e.g., the second external electronic device 107 of FIG. 1), the electronic device 103, and/or the first external electronic device 105. For example, the first external electronic device 105 may identify the battery of the electronic device 103 and/or a remaining amount (e.g., SOC) of the battery of the first external electronic device 105, through the screen 610. Although not illustrated, the first external electronic device 105 may display the different screen (e.g., the screen 550 of FIG. 5B) from the screens 610 and 630.

The electronic device 103 according to an embodiment may transmit the signal requesting the display of the screen for selectively transmitting the received power to any one of the first external electronic device 105 or the second external electronic device (e.g., the second external electronic device 107 of FIG. 1), by wire, using the cable while maintaining at least one communication link with the first external electronic device 105. In response to receiving the signal, the first external electronic device 105 may display the screen 630 through the display 540.

The first external electronic device 105 according to an embodiment may identify at least one input, based on the screen 630. The screen 630 may include a first part 631 and/or a second part 632. The first external electronic device 105 may identify the input with respect to the first part 631. The first external electronic device 105 may transmit, based on the identified input, to the electronic device 103, the signal (e.g., the input signal 460 of FIG. 4) including the information requesting to transmit the power outputted from the battery (e.g., the battery 260 of FIG. 2) and/or the interface (e.g., the first interface 225 of FIG. 2) to the first external electronic device 105. Based on receiving the signal, in the state 300, the electronic device 103 may transmit the power outputted from the battery and/or from the interface to the first external electronic device 105.

The first external electronic device 105 according to an embodiment may identify an input for the second part 632. The first external electronic device 105 may transmit, based on the identified input, to the electronic device 103, the signal including the information requesting to transmit the power outputted from the battery and/or the interface to at least one external electronic device (e.g., the second external electronic device 107 of FIG. 1) accommodated in the electronic device. For example, based on receiving the signal, the electronic device 103 may transmit the power outputted from the battery and/or from the interface to at least one external electronic device (e.g., the second external electronic device 107 of FIG. 1). For example, in case that the SOC of the at least one external electronic device is 100%, the electronic device 103 may temporarily stop transmitting the power to the at least one external electronic device.

Although not illustrated, the first external electronic device 105 according to an embodiment may identify the input requesting to transmit the power outputted from the battery and/or the interface of the electronic device 103 to the first external electronic device 105 and at least one external electronic device (e.g., the second external electronic device 107) accommodated in the electronic device 103 at the same time, independently of displaying the screen 630. For example, the first external electronic device 105 may transmit the signal including information on the request to the electronic device 103, based on identifying the input. In response to receiving the signal, the electronic device 103 may transmit the power outputted from the battery and/or the interface to the first external electronic device 105 and the accommodated at least one external electronic device (e.g., the second external electronic device 107). For example, the electronic device 103 may transmit the power outputted from the interface to the battery, and transmit the power outputted from the battery to the accommodated at least one external electronic device (e.g., the second external electronic device 107) and the first external electronic device 105. According to an embodiment, the electronic device 103 may transmit, to the battery of the battery of the electronic device 103 or the first external electronic device 105, the power outputted from the interface, during a first time interval within a period. The electronic device 103 transmit, to the external electronic device 105 of the battery or the external electronic device 105, the power outputted from the interface, during a second time interval within the period.

According to an embodiment, in the first state, the electronic device 103 may transmit the power outputted from the battery to the external electronic device (e.g., the second external electronic device 107 of FIG. 1) accommodated in the electronic device 103 while transmitting the power outputted from the interface to the first external electronic device 105. For example, based on the different screen from the screens 610 and 630, the first external electronic device 105 may transmit, to the electronic device 103, the signal requesting to transmit the power to the first external electronic device 105 and the accommodated external electronic device (e.g., the second external electronic device 107).

In case of transmitting the power to the first external electronic device 105 and the second external electronic device (e.g., the second external electronic device 107 of FIG. 1), the electronic device 103 according to an embodiment may transmit the signal for requesting the display of at least one screen to the first external electronic device 105. For example, the at least one screen may include the information on charging time of the first external electronic device 105 and/or the second external electronic device. For example, a first charging time of the first external electronic device 105 of the case in which the electronic device 103 transmits the power to the first external electronic device 105 and the second external electronic device may be relatively increased than a second charging time of the first external electronic device 105 of the case in which the electronic device 103 transmits the power only to the first external electronic device 105. For example, the first external electronic device 105 may display the at least one screen through the display 540, based on receiving the signal. According to an embodiment, the electronic device 103 may transmit the power to the first external electronic device 105 and the second external electronic device at the same time, alternatively to transmitting the power to the first external electronic device 105 and the second external electronic device (e.g., the second external electronic device 107 of FIG. 1). For example, in case of transmitting the power to the external electronic devices, the electronic device 103 may transmit at least one signal including the information on charging time, to the first external electronic device 105. Based on the received signal, the first external electronic device 105 may display the screen including the information on the charging time through the display 540.

The first external electronic device 105 according to an embodiment may display the screen including the information on the electronic device (e.g., the first external electronic device 105 or the external electronic device accommodated in the electronic device 103) different from the electronic device 103 receiving the power from the electronic device 103, based on the input to the first part 631 and/or the input to the second part 632, through the display 540. For example, in case that the first external electronic device 105 receives the power in the screen 610, the first external electronic device 105 may change at least one of a color or a size of an icon for the first external electronic device 105. For example, in case that the electronic device 103 transmits the power to the different external electronic device (e.g., the second external electronic device 107 of FIG. 1) in the screen 610, the first external electronic device 105 may adjust at least one of the color or the size of the icon for the different external electronic device.

The first external electronic device 105 according to an embodiment may control the data corresponding to the input the input to the first part 631 and/or the input to the second part 632. For example, based on identifying the contact of the electronic device 103, the first external electronic device 105 may transmit the data corresponding to the input to the first part 631 and/or the input to the second part 632 to the electronic device 103, independently of displaying the screen 630. The first external electronic device 105 may change an order of the data corresponding to the input to the first part 631 and/or the input to the second part 632. For example, in case that the first external electronic device 105 transmits the data corresponding to the input to the second part 632, the electronic device 103 may transmit the power to the external electronic device (e.g., the second external electronic device 107 of FIG. 1). In case that the battery SOC of the external electronic device (e.g., the second external electronic device 107 of FIG. 1) becomes 100%, the first external electronic device 105 may transmit the data corresponding to the input for the first part 631 to the electronic device 103. According to an embodiment, the electronic device 103 may transmit the power to the external electronic device (e.g., the first external electronic device 105 or the second external electronic device 107), based on the preset order. For example, the electronic device 103 may transmit to one of the first external electronic device 105 or the second external electronic device (e.g., the second external electronic device 107 of FIG. 1), based on the order of preset data while not establishing the communication link with the first external electronic device 105. However, it is not limited thereto.

Independently of the electronic device 103 and the first external electronic device 105 establishing at least one communication link according to an embodiment, the electronic device 103, in the second state, may indicate at least one SOC of the electronic device 103 or the external electronic device (e.g., the second external electronic device 107) accommodated in the electronic device 103, based on at least one LED (e.g., the LED 510-2 of FIG. 5A). As an example, in case that the at least one LED is a first color (e.g., blue), the SOC of the external electronic device may be more equal to about 80%. As an example, in case that the at least one LED is a second color (e.g., yellow), the SOC may be more equal to about 40% and less than 80%. As an example, in case that the at least one LED is a third color (e.g., red), the SOC may be more equal to about 20% and less than 40%. As an example, in case that the LED is repeatedly blinking, the SOC may be less than about 20%.

As described above, the electronic device 103 may selectively transmit the power to at least one of the first external electronic device 105 and the second external electronic device 107, based on the first external electronic device 105. The first external electronic device 105 may display the first screen 630 requesting the selection through the display 540. The first external electronic device 105 may request the selection from a user of the electronic device 103, based on the first screen. The first external electronic device 105 may display the second screen 610 including the SOC of the electronic device 103, the SOC of the first external electronic device 105, and/or the SOC of the second external electronic device 107, through the display 540. The first external electronic device 105 may display the second screen through the display 540, and provide SOC of the electronic devices to the user.

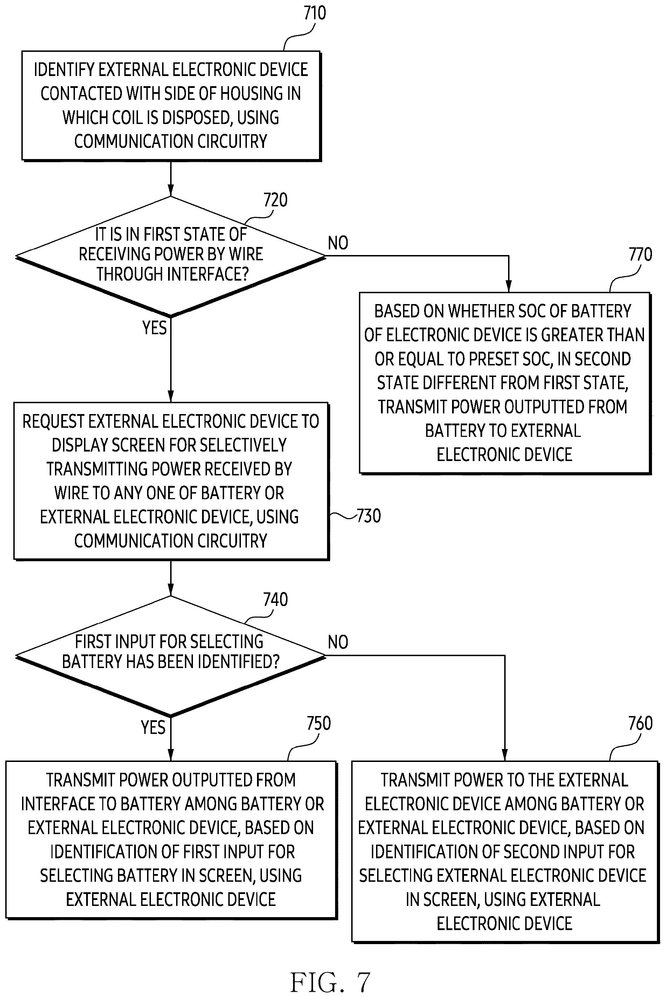

FIG. 7 is an exemplary flowchart for describing an operation in which an electronic device according to an embodiment transmits power to an external electronic device. Referring to FIG. 7, the electronic device may correspond to the electronic device 103 of FIG. 1. At least one of the operations of FIG. 7 may be performed by the electronic device 103 of FIG. 1 and/or the processor 203 of FIG. 2.

Referring to FIG. 7, the processor (e.g., the processor 203 of FIG. 2) according to an embodiment may identify an external electronic device contacted with a side of a housing in which a coil is disposed, using a communication circuitry in an operation 710. The communication circuitry may be matched with the communication circuitry 250 of FIG. 2. The coil may correspond to the coil 240 of FIG. 2. The housing may correspond to the second housing 512 of FIG. 5A. The external electronic device may correspond to a first external electronic device 105 of FIG. 1. The processor may include a PMIC. A coil different from the coil may be disposed on the side of the housing of the contacted external electronic device (e.g., the first external electronic device 105). The coil may include a receiving coil, a transmitting coil and/or a transmitting/receiving coil.

Referring to FIG. 7, the processor (e.g., the processor 203 of FIG. 2) according to an embodiment may identify whether it is in a first state of receiving the power by wire through an interface in an operation 720. For example, the interface may correspond to the first interface 225 of FIG. 2. The interface may include at least one connecting terminal. The first state may be included in the state 300 of FIG. 3. The electronic device and/or the processor may use at least one cable (e.g., the cable 310 of FIG. 3) for receiving the power by wire through the interface.

Referring to FIG. 7, in case that it is in the first state (operation 720-YES), in an operation 730, the processor (e.g., processor 203 of FIG. 2) according to an embodiment may request the external electronic device to display a screen for selectively transmitting the power received by the wire to any one of the battery or the external electronic device, using the communication circuitry. For example, the battery may correspond to the battery 260 of FIG. 2. The screen may correspond to the screen 630 of FIG. 6. For example, the processor and/or the electronic device 103 may establish at least one communication link with the external electronic device based on the communication circuitry. The processor and/or the external electronic device (e.g., the first external electronic device 105 of FIG. 1) may transmit and/or receive a data signal (e.g., data signals 401 and 451 of FIG. 4) to establish the at least one communication link. For example, based on the communication link, the processor may request the external electronic device (e.g., the first external electronic device 105 of FIG. 1) to display the screen (e.g., the screen 630 of FIG. 6) for selectively transmitting to any one of the battery or the external electronic device. The electronic device 103 may identify the signal (e.g., the input signal 460 of FIG. 4) including the information indicating a selection of any one of the battery or the external electronic device, using the external electronic device.

Referring to FIG. 7, in an operation 740, the processor (e.g., the processor 203 of FIG. 2) according to an embodiment may check whether the first input for selecting the battery has been identified. For example, the first input for selecting the battery may include the input for the second part 632 on the screen 630 of FIG. 6. The external electronic device (e.g., the first external electronic device 105 of FIG. 1) may transmit the signal (e.g., the input signal 460 of FIG. 4) including the data on the first input to the electronic device (e.g., the electronic device 103 of FIG. 1). The processor and/or the electronic device may identify the first input, based on receiving the signal.

Referring to FIG. 7, in case that the first input is identified (operation 740-YES), the processor (e.g., the processor 203 of FIG. 2) according to an embodiment may transmit the power outputted from the interface to the battery among the battery or the external electronic device, based on identification of the first input for selecting the battery in the screen, using the external electronic device (e.g., the first external electronic device 105 of FIG. 1), in an operation 750. According to an embodiment, the processor may transmit the power to the external electronic device (e.g., the second external electronic device 107 of FIG. 1) different from the external electronic device accommodated in the electronic device, based on transmitting to the battery. For example, the different external electronic device (e.g., the second external electronic device 107 of FIG. 1) may receive the power from the interface (e.g., the second interface 230 of FIG. 2) different from the interface (e.g., the first interface 225 of FIG. 2) of the electronic device (e.g., the electronic device 103 of FIG. 1).

Referring to FIG. 7, in case that the first input is not identified (operation 740-NO), the processor (e.g., processor 203 of FIG. 2) according to an embodiment may transmit the power to the external electronic device among the battery or the external electronic device, based on the identification of the second input for selecting the external electronic device in the screen, using the external electronic device (e.g., the first external electronic device 105 of FIG. 1), in an operation 760. For example, the second input may mean the input for the first part 631 of FIG. 6 on the screen 630 of FIG. 6. The external electronic device may transmit at least one signal including the data on the input to the electronic device (e.g., the electronic device 103 of FIG. 1). The at least one signal may correspond to the input signal 460 of FIG. 4. Based on transmitting the power to the coil (e.g., the coil 240 of FIG. 2), the processor may cause induced power for the power to the coil different from the coil included in the external electronic device. The external electronic device (e.g., the first external electronic device 105 of FIG. 1) may charge the battery of the external electronic device (e.g., the first external electronic device 105 of FIG. 1), based on the induced power.

Referring to FIG. 7, in case that it is not in the first state (operation 720-No), based on whether the SOC of the battery (e.g., battery 260 of FIG. 2) of the electronic device (e.g., the electronic device 103 of FIG. 1) is greater than or equal to the preset SOC, in the second state different from the first state, the processor (e.g., the processor 203 of FIG. 2) according to an embodiment may transmit the power outputted from the battery to the external electronic device (e.g., the first external electronic device 105 of FIG. 1), in an operation 770. For example, the second state may be included in the state 300 of FIG. 3. The second state may be an example of the state in which the processor does not receive power by wire, using at least one cable (e.g., the cable 310 of FIG. 3). The SOC of the battery may mean the SOC of the battery of the electronic device (e.g., the electronic device 103 of FIG. 1) including a processor. The preset SOC may mean about 20%. In case that the SOC of the battery is less than 20%, the processor may stop transmitting the power to the external electronic device 105. For example, the processor may transmit at least one signal to the external electronic device 105 while maintaining at least one communication link for the interruption. The external electronic device may display at least one screen on the display (e.g., the display 540 of FIG. 5B), based on receiving the at least one signal.

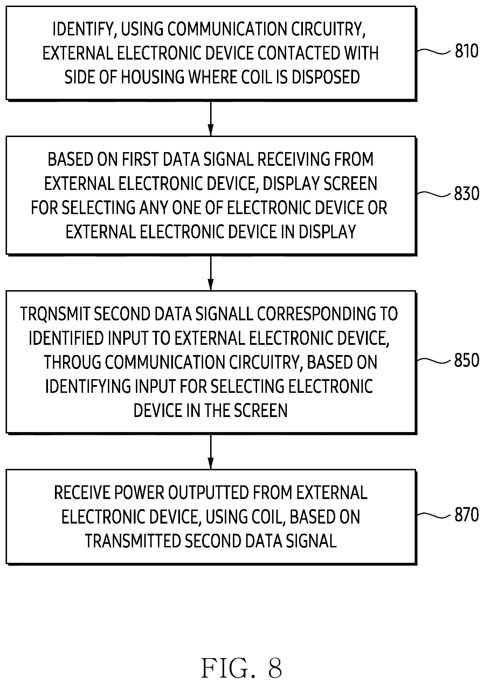

FIG. 8 is an exemplary flowchart for describing an operation in which an electronic device receives power from an external electronic device according to an embodiment. Referring to FIG. 8, the electronic device may correspond to the first external electronic device 105 of FIG. 1. At least one of the operations of FIG. 8 may be performed by a processor of the first external electronic device 105 of FIG. 1.

Referring to FIG. 8, in an operation 810, the processor (e.g., the processor of the first external electronic device 105 of FIG. 1) according to an embodiment may identify, using communication circuitry, the external electronic device (e.g., the electronic device 103 of FIG. 1) contacted with a side of the housing where a coil is disposed. The coil may correspond to the coil 240 of FIG. 2. The external electronic device may correspond to the electronic device 103 of FIG. 1. The processor may establish at least one communication link with the external electronic device, using the communication circuitry.

Referring to FIG. 8, in an operation 830, the processor (e.g., the processor of the first external electronic device 105 of FIG. 1) according to an embodiment, based on a first data signal receiving from the external electronic device (e.g., the electronic device 103 of FIG. 1), may display a screen for selecting any one of the electronic device (the first external electronic device 105 of FIG. 1) or the external electronic device (e.g., the electronic device 103 of FIG. 1) in a display. The first data signal may correspond to the connection signal 453 of FIG. 4. The screen may correspond to the screen 630 of FIG. 6. The display may correspond to the display 540 of FIG. 5B.

Referring to FIG. 8, in an operation 850, the processor (e.g., the processor of the first external electronic device 105 of FIG. 1) according to an embodiment may transmit a second data signal corresponding to the identified input to the external electronic device, through the communication circuitry, based on identifying the input for selecting the electronic device in the screen. The input for selecting the electronic device may correspond to the input for the second part 632 of FIG. 6. The second data signal may correspond to the input signal 460 of FIG. 4. The processor may transmit the signal including the data corresponding to a user input to the external electronic device (e.g., the electronic device 103 of FIG. 1) while maintaining at least one communication link with the external electronic device (e.g., the electronic device 103 of FIG. 1).

Referring to FIG. 8, in an operation 870, the processor (e.g., the processor of the first external electronic device 105 of FIG. 1) according to an embodiment may receive the power outputted from the external electronic device (e.g., the electronic device 103 of FIG. 1), using the coil, based on the transmitted second data signal. The power outputted from the external electronic device (e.g., the electronic device 103 of FIG. 1) may include the power outputted from an interface (e.g., the first interface 225 of FIG. 2) and/or the battery (e.g., the battery 260 of FIG. 2) included in the external electronic device. The processor may charge the battery of the electronic device, using the induced power caused in the coil, based on the power outputted from the external electronic device (e.g., the electronic device 103 of FIG. 1). For example, based on the SOC of the battery of the electronic device (e.g., the first external electronic device 105 of FIG. 1), the processor may transmit a request to stop transmitting the power to the external electronic device (e.g., the electronic device 103 of FIG. 1). The SOC of the battery for transmitting the request may be 100%. The processor may use at least one communication link to transmit the request.

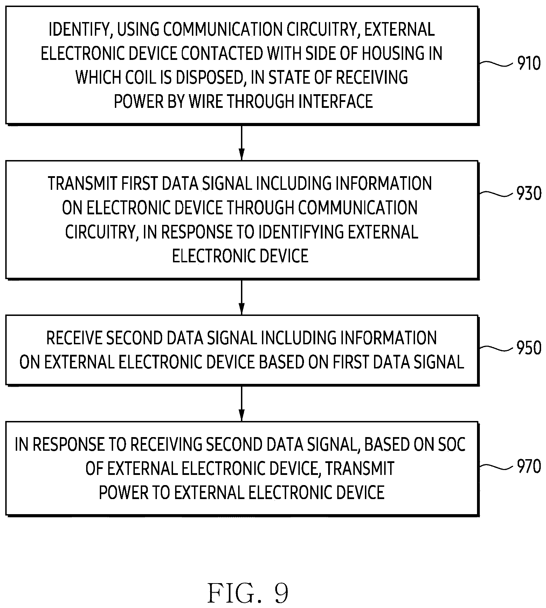

FIG. 9 is an exemplary flowchart for describing an operation in which while receiving power by wire, an electronic device according to an embodiment transmits power to an external electronic device. Referring to FIG. 9, the electronic device may correspond to the electronic device 103 of FIG. 1. At least one of the operations of FIG. 9 may be performed by the electronic device 103 of FIG. 1 and/or the processor 203 of FIG. 2. The electronic device may accommodate at least one external electronic device (e.g., the second external electronic device 107 of FIG. 1).

Referring to FIG. 9, in an operation 910, the processor (e.g., the processor 203 of FIG. 2) according to an embodiment may identify, using a communication circuitry, the external electronic device contacted with a side of a housing in which a coil is disposed, in a state of receiving power by wire through an interface. The interface may correspond to a first interface 225 of FIG. 2. The state of receiving the power by wire may be included in the state 300 of FIG. 3. For example, the processor may use at least one cable (e.g., cable 310 of FIG. 3) to receive the power by wire. The communication circuitry may correspond to the communication circuitry 250 of FIG. 2. The coil may correspond to the coil 240 of FIG. 2. The housing may correspond to a first housing 511 of FIG. 5A and/or a second housing 512 of FIG. 5A. The external electronic device may correspond to the first external electronic device 105 of FIG. 1. The electronic device 103 may establish at least one communication link, using the external electronic device (e.g., the first external electronic device 105 of FIG. 1) and at least one communication circuitry.

Referring to FIG. 9, in an operation 930, the processor (e.g., processor 203 of FIG. 2) according to an embodiment may transmit a first data signal including information of the electronic device through the communication circuitry, in response to identifying the external electronic device (e.g., the first external electronic device 105 of FIG. 1). The first data signal including the information of the electronic device may correspond to the data signal 401 of FIG. 4. In the state, the processor may periodically transmit the first data signal through the communication circuitry.

Referring to FIG. 9, in an operation 950, the processor (e.g., processor 203 of FIG. 2) according to an embodiment may receive a second data signal including information of the external electronic device (e.g., first external electronic device 105 of FIG. 1) based on the first data signal. For example, the processor may receive the second data signal while maintaining at least one communication link with the external electronic device. The second data signal may include at least one of the data signal 451 of FIG. 4 or the input signal 460 of FIG. 4. The information of the external electronic device (e.g., the first external electronic device 105 of FIG. 1) may include identification information of the external electronic device, user information of the external electronic device, the SOC of the external electronic device, and the information corresponding to at least one input based on the display (e.g., the display 540 of FIG. 5B) of the external electronic device.

Referring to FIG. 9, in an operation 970, based on the SOC of the external electronic device (e.g., the first external electronic device 105 of FIG. 1), in response to receiving the second data signal (e.g., one of the data signal 451 or the input signal 460 of FIG. 4), the processor (e.g., processor 203 of FIG. 2) according to an embodiment may transmit the power to the external electronic device. In case that the SOC of the external electronic device (e.g., the first external electronic device 105 of FIG. 1) is less than 100%, the processor may transmit the power to the external electronic device (e.g., the first external electronic device 105 of FIG. 1). In case that the SOC of the external electronic device (e.g., the first external electronic device 105 of FIG. 1) is 100%, the processor may stop transmitting the power to the external electronic device. The processor may transmit the power outputted from the interface (e.g., the first interface 225 of FIG. 2) to the coil (e.g., the coil 240 of FIG. 2) in order to transmit the power to the external electronic device. Based on generation of induced power in the coil of the external electronic device (e.g., the first external electronic device 105 of FIG. 1), based on the coil, the battery of the external electronic device may be charged.

As described above, the electronic device (e.g., the electronic device 103 of FIG. 1) may wirelessly transmit the power to the external electronic device, while maintaining at least one communication link with the external electronic device (e.g., the first external electronic device 105 of FIG. 1), in a state of receiving power from at least one interface (e.g., the first interface 225 of FIG. 2), using a cable. Users of electronic devices (e.g., the electronic device 103 of FIG. 1) may charge the electronic devices (e.g., the electronic device 103 of FIG. 1) and/or the external electronic device (e.g., the first external electronic device 105 of FIG. 1), using one cable. The user of the electronic device may adjust to selectively transmit the power to at least one of the electronic device (e.g., the electronic device 103 of FIG. 1) or the external electronic device (e.g., the first external electronic device 105 of FIG. 1), using the external electronic device (e.g., the first external electronic device 105 of FIG. 1).

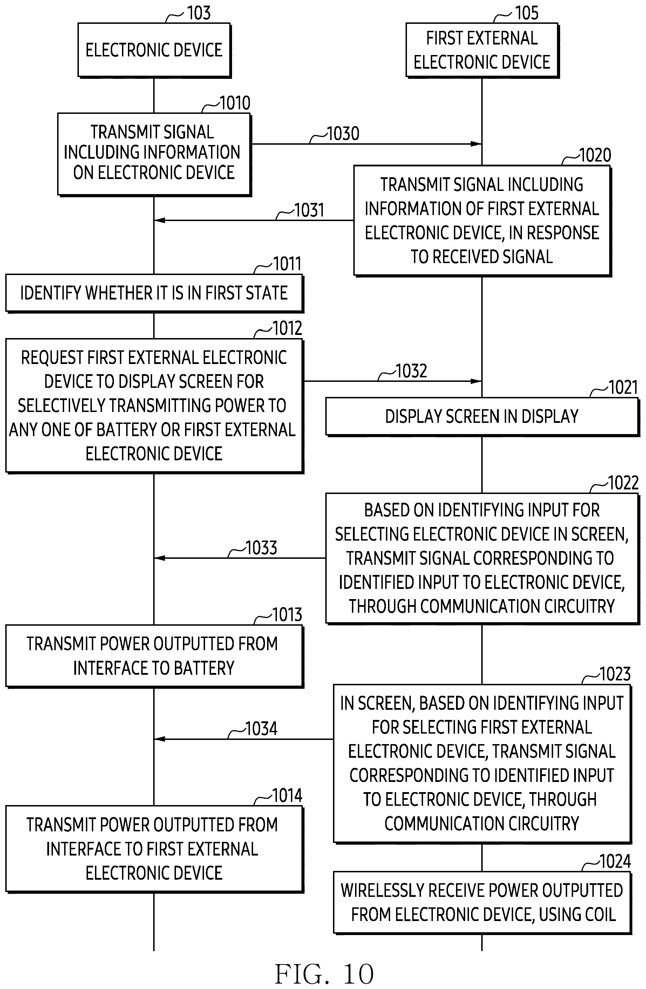

FIG. 10 illustrates an exemplary signal flowchart between an electronic device and an external electronic device according to an embodiment. Referring to FIG. 10, a signal flow may be caused by an electronic device 103 of FIG. 1 and a first external electronic device 105 of FIG. 1.

Referring to FIG. 10, in an operation 1010, the electronic device 103 according to an embodiment may transmit a signal 1030 including information of the electronic device. The electronic device 103 may use at least one communication circuitry (e.g., the communication circuitry 260 of FIG. 2) to transmit the signal. The electronic device 103 may transmit the signal 1030 to a plurality of electronic devices including the first external electronic device 105. The signal 1030 may correspond to the data signal 401 of FIG. 4. The signal 1030 may include the information requesting to display at least one screen (e.g., the screen 550 of FIG. 5B), through a display (e.g., the display 540 of FIG. 5B) of the first external electronic device 105.

Referring to FIG. 10, in an operation 1020, the first external electronic device 105 according to an embodiment may transmit a signal 1031 including the information of the first external electronic device, in response to the received signal 1030. The signal 1031 may include at least one of the data signal 451 of FIG. 4 or the connection signal 452 of FIG. 4. The electronic device 103 and the first external electronic device 105 may establish a communication link, using at least one communication circuitry, based on transmitting and/or receiving the signal 1030 and the signal 1031.

Referring to FIG. 10, in an operation 1011, the electronic device 103 according to an embodiment may identify a first state. The first state may be an example of the state (e.g., the first state in the state 300 of FIG. 3) in which the electronic device 103 receives power by wire, based on establishing a connection with at least one cable (e.g., the cable 310 of FIG. 3). For example, the electronic device 103 may receive the power, based on the interface 103 (e.g., the first interface 225 of FIG. 2), of the electronic device, using the at least one cable.

Referring to FIG. 10, in an operation 1012, the electronic device 103 according to an embodiment may request the first external electronic device 105 to display a screen for selectively transmitting power to any one of the battery (e.g., the battery 260 of FIG. 2) or the first external electronic device 105. The electronic device 103 may transmit a signal 1032 including the information on the request to the first external electronic device 105, while maintaining the established communication link. For example, the screen may correspond to the screen 630 of FIG. 6. Referring to FIG. 10, in the operation 1021, the first external electronic device 105 may display the screen in the display. The display may correspond to the display 540 of FIG. 5B.

Referring to FIG. 10, in an operation 1022, in the screen, based on identifying an input for selecting the electronic device 103, the first external electronic device 105 may transmit a signal 1033 corresponding to the identified input to the electronic device, through the communication circuitry. The input for selecting the electronic device 103 may mean the input for the second part 632 of FIG. 6.

Referring to FIG. 10, in an operation 1013, the electronic device 103 may transmit the power outputted from the interface (e.g., the first interface 225 of FIG. 2) to the battery. The electronic device 103 may charge the battery, based on the power transmitted to the battery. For example, the electronic device 103 may accommodate a second external electronic device (e.g., the second external electronic device 107 of FIG. 1) different from the first external electronic device 105. The second external electronic device (e.g., the second external electronic device 107 of FIG. 1) may be contacted with the interface different from the interface of the electronic device 103 (e.g., the second interface 230 of FIG. 2). The electronic device 103 may transmit at least one power to the second external electronic device (e.g., the second external electronic device 107 of FIG. 1), through the different interface, based on the battery. Based on the at least one transmitted power, the second external electronic device (e.g., the second external electronic device 107 of FIG. 1) may charge the battery of the second external electronic device.

Referring to FIG. 10, in an operation 1023, in the screen, based on identifying the input for selecting the external electronic device 105, the first external electronic device 105 according to an embodiment may transmit a signal 1034 corresponding to the identified input to the electronic device, through the communication circuitry. For example, the first external electronic device 105 may display the screen (e.g., the screen 630 of FIG. 6) on the display (e.g., display 540 of FIG. 5B), while establishing the communication link with the electronic device 103. The input for selecting the first external electronic device 105 may correspond to the input for the first part 631 of FIG. 6. The signal 1034 may include information requesting the electronic device 103 to transmit at least one power to the first external electronic device 105. Referring to FIG. 10, based on receiving the signal 1034, in an operation 1014, the electronic device 103 may transmit the power outputted from the interface to the first external electronic device 105.

Referring to FIG. 10, in an operation 1024, the first external electronic device 105 according to an embodiment may wirelessly receive the power outputted from the electronic device 103, using the coil (e.g., the coil 351 of FIG. 3) of the first external electronic device 105. The power outputted from the electronic device 103 may correspond to the power outputted from the interface of the electronic device 103.

As described above, the electronic device 103 and/or the external electronic device 105 may transmit and/or receive the power, using the cable (e.g., the cable 310 of FIG. 3) connected to the electronic device 103, while establishing at least one communication link. The electronic device 103 and/or the external electronic device 105 may transmit and/or receive the signal including the information of the electronic device 103 and/or the signal including the information of the external electronic device 105, based on the communication link. The user of the electronic device 103 and the external electronic device 105 may identify the information through the display (e.g., the display 540 of FIGS. 5B and 6) of the external electronic device 105. The user of the electronic device 103 and the external electronic device 105 may select to transmit the power to at least one of the electronic device 103 and/or the external electronic device 105, based on the display of the external electronic device 105.

While the electronic device establishes the communication link with one of a plurality of external electronic devices, a method to selectively transmit the power to at least one of the plurality of external electronic devices, based on the display included in one of the plurality of external electronic devices may be required.

The electronic device may transmit the power, optionally, to at least one of the plurality of external electronic devices, based on the display included in one of the plurality of external electronic devices, while establishing the communication link with one of the plurality of external electronic devices.

As described above, the electronic device (e.g., the electronic device 103 of FIG. 1) according to an embodiment may include a housing (e.g., the first housing 511 of FIG. 5A and the second housing 512 of FIG. 5A), an interface (e.g., the first interface 225 of FIG. 2) for receiving the power by wire, a coil (e.g., the coil 240 of FIG. 2) disposed on a side of the housing for transmitting wirelessly power to an external electronic device (e.g., the first external electronic device 105 of FIG. 1) different from the electronic device, communication circuitry (e.g., the communication circuitry 250 of FIG. 2) for communicating with the external electronic device, a battery (e.g., the battery 260 of FIG. 2), memory (e.g., the memory 205 of FIG. 2) for storing instructions, and at least one processor operably coupled to the coil, the communication circuitry, the battery, the interface and the memory. The at least one processor, when the instructions are executed, may identify, using the communication circuitry, the external electronic device contacted with the side of the housing where the coil is disposed. The at least one processor, when the instructions are executed, in a first state (e.g., the first state of the state 300 of FIG. 3) for receiving the power by wire through the interface, may request, to the external electronic device using the communication circuitry, a display of a screen (e.g., the screen 630 of FIG. 6) for transmitting selectively the power received by the wire to any one of the battery or the external electronic device. The at least one processor, when the instructions are executed, based on identification of a first input (e.g., the input for the second part 632 of FIG. 6) selecting the battery in the screen using the external electronic device, may transmit the power outputted from the interface to the battery of the battery or the external electronic device. The at least one processor, when the instructions are executed, based on identification of a second input (e.g., the input to the first part 631 of FIG. 6) selecting the external electronic device in the screen using the external electronic device, may transmit the power to the external electronic device of the battery or the external electronic device. The at least one processor, when the instructions are executed, in the second state (e.g., the second state among the state 300 of FIG. 3) different from the first state, based on whether a SOC of the battery is equal to or larger than the preset SOC, may be configured to transmit, to the external electronic device, the power outputted from the battery.

For example, the at least one processor, when the instructions are executed, in the first state while receiving the power from the interface, using the communication circuitry, may transmit, to the external electronic device, a first data signal (e.g., the data signal 401 of FIG. 4) including information of the electronic device. The at least one processor, when the instructions are executed, in the second state based on a preset event that causes transmission of the first data signal, initiate transmission of the first data signal.

For example, the preset event may be identified by at least one of a first gesture that moves different parts of the housing of the electronic device based on a preset number, a second gesture pushing a button (e.g., the button 510-1 of FIG. 5A) exposed to an outside through at least a part of the housing, or a second data signal for requesting for transmission of power based on the coil from the external electronic device.

For example, the at least one processor, when the instructions are executed, based on receiving the second data signal based on the first data signal, from the external electronic device that has received the first data signal, may transmit the power to the external electronic device, using the coil.

For example, the first data signal may include the information indicating a time interval for the external electronic device to transmit the second data signal.

For example, the screen may include at least one of the information for selecting any one of the battery or the external electronic device, or the information including at least one of the SOC of the battery, or the SOC of the external electronic device.

For example, the screen may be a first screen. The at least one processor, when the instructions are executed, based on receiving the second data signal from the external electronic device that has received the first data signal, may request, through the communication circuitry, the external electronic device to display a second screen for establishing a connection of the electronic device and the external electronic device.

For example, the at least one processor, when the instructions are executed, in the first state, may transmit, to the battery of the external electronic device or the battery, power outputted from the interface, during a first time interval within a period, independently of the first input and the second input. The at least one processor, when the instructions are executed, may transmit, to the external electronic device of the external electronic device or the battery, the power outputted from the interface, during a second time interval within the period.

For example, the external electronic device may be a first external electronic device. The interface may be a first interface. The housing of the electronic device may include a part for accommodating a second external electronic device (e.g., the second external electronic device 107 of FIG. 1). The electronic device which the at least one processor, when the instructions are executed, in the second state, based on identification of the second external electronic device contacted with the part, transmits, to the second external electronic device through a second interface (e.g., the second interface 230 of FIG. 2) different from the first interface, the power outputted from the battery.

For example, the at least one processor, when the instructions are executed, in the second state, may request, to the first external electronic device, a display of a third screen for transmitting selectively to any one of the first external electronic device, or the second external electronic device, the power outputted from the battery.

As described above, a method of an electronic device (e.g., the first external electronic device 105 of FIG. 1) according to an embodiment may include identifying, using communication circuitry (e.g., the communication circuitry 250 of FIG. 2), an external electronic device (e.g., the electronic device 103 of FIG. 1) contacted with a side of a housing where a coil is disposed. The method may include, based on a first data signal (e.g., the data signal 401 of FIG. 4) receiving from the external electronic device, displaying a screen (e.g., the screen 630 of FIG. 6) for selecting any one of the electronic device or the external electronic device in the display (e.g., the display 220 of FIG. 2). The method may include, based on identifying an input selecting the electronic device in the screen, transmitting, to the external electronic device through the communication circuitry, a second data signal (e.g., the data signal 451 of FIG. 4) corresponding to the identified input. The method may include, receiving power outputted from the external electronic device using the coil, based on the transmitted second data signal.

For example, the first data signal may include information indicating a time interval (e.g., the scan period 450 of FIG. 4) for the electronic device to receive the second data signal. The method may include transmitting, during the time interval, to the external electronic device through the communication circuitry, the second data signal.

For example, the screen may be a first screen. The method may include displaying, through the display, a second screen for establishing a connection of the electronic device and the external electronic device based on transmitting the second data signal.

For example, the method may include transmitting, through the communication circuitry, the second data signal to the external electronic device, based on at least one application stored on memory (e.g., the memory 205 of FIG. 2) of the electronic device.

For example, the method may include, based on a state of charge (SOC) of a battery (e.g., the battery 260 of FIG. 2) of the electronic device, requesting, to the external electronic device through the communication circuitry, for ceasing transmission of the power.

As described above, the electronic device (e.g., the electronic device 103 of FIG. 1) according to an embodiment may include a housing (e.g., the first housing 511 of FIG. 5A and the second housing 512 of FIG. 5A), a coil (e.g., the coil 240 of FIG. 2) disposed on a side of the housing for transmitting wirelessly power to an external electronic device (e.g., the first external electronic device 105 of FIG. 1) different from the electronic device, communication circuitry (e.g., the communication circuitry 250 of FIG. 2) for communicating with the external electronic device, a battery (e.g., the battery 260 of FIG. 2), an interface (e.g., the first interface 225 of FIG. 2) for receiving the power by wire, memory (e.g., the memory 205 of FIG. 2) for storing instructions, and at least one processor operably coupled to the coil, the communication circuitry, the battery, the interface and the memory. The at least one processor, when the instructions are executed, in a state (e.g., the first state of the state 300 of FIG. 3) for receiving the power by wire through the interface, may identify the external electronic device contacted with the side of the housing where the coil is disposed, using the communication circuitry. The at least one processor, when the instructions are executed, in response to identification of the external electronic device, transmit a first data signal (e.g., the data signal 401 of FIG. 4) including information of the electronic device through the communication circuitry. The at least one processor, when the instructions are executed, may receive a second data signal (e.g., the data signal 451 of FIG. 4) including the information of the external electronic device based on the first data signal, using the communication circuitry. The at least one processor, when the instructions are executed, may transmit the power to any one of the external electronic device or the battery, based on the SOC of the external electronic device, in response to receiving the second data signal.

For example, the second data signal may include the information for transmitting the power to at least one of the battery or the external electronic device. The at least one processor, when the instructions are executed, may establish a connection between the electronic device and the external electronic device through the communication circuitry, based on receiving the second data signal. The at least one processor, when the instructions are executed, may initiate transmitting the power to the external electronic device, based on establishing the connection.

For example, the state may be the first state. The at least one processor, when the instructions are executed, in the second state (e.g., the second state among the state 300 of FIG. 3) different from the first state, based on whether a SOC of the battery is equal to or larger than the preset SOC, may transmit, to the external electronic device, the power outputted from the battery, which is different from the power.

For example, the external electronic device may be a first external electronic device. The interface may be a first interface. The housing of the electronic device may include a part for accommodating a second external electronic device (e.g., the second external electronic device 107 of FIG. 1). The electronic device which the at least one processor, when the instructions are executed, in the second state, based on identification of the second external electronic device contacted with the part, may transmit, to the second external electronic device through a second interface (e.g., the second interface 230 of FIG. 2) different from the first interface, the power outputted from the battery.

For example, the screen may be a first screen. In the second state, a display of a second screen different from the screen for transmitting selectively to any one of the first external electronic device, or the second external electronic device, may be requested.

As described above, the electronic device (e.g., the external electronic device 105 of FIG. 1) according to an embodiment may include a housing, a coil (e.g., the coil 240 of FIG. 2) disposed on a side of the housing for transmitting wirelessly power to an external electronic device (e.g., the electronic device 103 of FIG. 1) different from the electronic device, communication circuitry (e.g., the communication circuitry 250 of FIG. 2) for communicating with the external electronic device, a battery (e.g., the battery 260 of FIG. 2), a display (e.g., the display 220 of FIG. 2), memory (e.g., the memory 205 of FIG. 2) for storing instructions, and at least one processor operably coupled to the coil, the communication circuitry, the battery, the display and the memory. The at least one processor, when the instructions are executed, may identify the external electronic device contacted with the side of the housing where the coil is disposed, using the communication circuitry. The at least one processor, when the instructions are executed, based on the first data signal (e.g., the data signal 401 of FIG. 4) receiving from the external electronic device, may display a screen (e.g., the screen 630 of FIG. 6) for selecting any one of the electronic device or the external electronic device in the display. The at least one processor, when the instructions are executed, based on identifying an input selecting the electronic device in the screen, may transmit, to the external electronic device through the communication circuitry, a second data signal (e.g., the data signal 451 of FIG. 4) corresponding to the identified input. The at least one processor, when the instructions are executed, may receive the power outputted from the external electronic device using the coil, based on the transmitted second data signal.

For example, the first data signal may include information indicating a time interval (e.g., the scan period 450 of FIG. 4) for the electronic device to receive the second data signal. The at least one processor, when the instructions are executed, may transmit, during the time interval, to the external electronic device through the communication circuitry, the second data signal.

For example, the screen may be the first screen. The at least one processor, when the instructions are executed, may display, through the display, a second screen for establishing a connection of the electronic device and the external electronic device based on transmitting the second data signal.

For example, the at least one processor, when the instructions are executed, may transmit, through the communication circuitry, the second data signal to the external electronic device, based on at least one application stored on the memory.

For example, the at least one processor, when the instructions are executed, based on a state of charge (SOC) of the battery, to the external electronic device through the communication circuitry, may request for ceasing transmission of the power.

As described above, a method of an electronic device (e.g., the electronic device 103 of FIG. 1) according to an embodiment, in a state (e.g., the first state of the state 300 of FIG. 3) for receiving power by wire through an interface, may include identifying and an external electronic device (e.g., the first external electronic device 105 of FIG. 1) contacted with a side of a housing (e.g., the first housing 511 of FIG. 5A and the second housing 512 of FIG. 5A) where a coil (e.g., the coil 240 of FIG. 2) is disposed, using communication circuitry (e.g., the communication circuitry 250 of FIG. 2). The method, in response to identification of the external electronic device, may include transmitting a first data signal (e.g., the data signal 401 of FIG. 4) including information of the electronic device through the communication circuitry. The method may include receiving a second data signal (e.g., the data signal 451 of FIG. 4) including the information of the external electronic device based on the first data signal, using the communication circuitry. The method may include transmitting the power to the external electronic device, based on the SOC of the external electronic device, in response to receiving the second data signal.

For example, the second data signal may include the information for transmitting the power to at least one of the battery of the electronic device or the external electronic device. The method may include establishing a connection between the electronic device and the external electronic device through the communication circuitry, based on receiving the second data signal. The method may include initiating transmitting the power to the external electronic device, based on establishing the connection.

For example, the state may be a first state. The method, in a second state (e.g., the second state among the state 300 of FIG. 3) different from the first state, based on whether the SOC of the battery is equal to or larger than the preset SOC, may include transmitting, to the external electronic device, the power outputted from the battery, which is different from the power.

For example, the external electronic device may be a first external electronic device. The interface may be a first interface. The housing of the electronic device may include a part for accommodating a second external electronic device (e.g., the second external electronic device 107 of FIG. 1). The method, in the second state, based on the identification of the second external electronic device contacted with the part, may include transmitting, to the second external electronic device through a second interface (e.g., the second interface 230 of FIG. 2) different from the first interface, the power outputted from the battery.

For example, the screen may be a first screen. The method may include requesting display of a second screen different from the screen for the electronic device selectively transmitting the power to any one of the first external electronic device and the second external electronic device, in the second state.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing;
an interface for receiving power by wire
a coil disposed on a side of the housing for transmitting wirelessly the power to an external electronic device different from the electronic device;
communication circuitry for communicate with the external electronic device;
a battery;
memory for storing instructions;
at least one processor operably coupled to the coil, the communication circuitry, the battery, the interface and the memory,
wherein the at least one processor, when the instructions are executed, are configured to:
identify, using the communication circuitry, the external electronic device contacted with the side of the housing where the coil is disposed;
in a first state for receiving the power by wire through the interface, request, to the external electronic device using the communication circuitry, a display of a screen for transmitting selectively the power received by the wire to any one of the battery or the external electronic device;
based on identification of a first input selecting the battery in the screen using the external electronic device, transmit power outputted from the interface to the battery of the battery or the external electronic device;
based on identification of a second input selecting the external electronic device in the screen using the external electronic device, transmit the power to the external electronic device of the battery or the external electronic device; and
in a second state different from the first state, based on whether a state of charge(SoC) of the battery is equal to or larger than a preset SoC, transmit, to the external electronic device, power outputted from the battery.

2. The electronic device of claim 1,
wherein the at least one processor, when the instructions are executed, are configured to:
in the first state,
while receiving the power from the interface, using the communication circuitry, transmit, to the external electronic device, a first data signal including information of the electronic device; and
in the second state,
based on a preset event that causes transmission of the first data signal, initiate transmission of the first data signal.

3. The electronic device of claim 2,
wherein the preset event is identified by at least one of a first gesture that moves different parts of the housing of the electronic device based on a preset number, a second gesture pushing a button exposed to an outside through at least a part of the housing, or a second data signal for requesting for transmission of power based on the coil from the external electronic device.

4. The electronic device of claim 2,
wherein the at least one processor, when the instructions are executed, are configured to:
based on receiving a second data signal based on the first data signal, from the external electronic device that has received the first data signal, transmit power to the external electronic device using the coil.

5. The electronic device of claim 4,
wherein the first data signal includes information indicating a time interval for the external electronic device to transmit the second data signal.

6. The electronic device of claim 1,
wherein the screen includes at least one of information for selecting any one of the battery or the external electronic device, or information including at least one of the SoC of the battery, or SoC of the external electronic device.

7. The electronic device of claim 2,
wherein the screen is a first screen,
wherein the at least one processor, when the instructions are executed, are configured to:
based on receiving a second data signal from an external electronic device that has received the first data signal, request, through the communication circuitry, the external electronic device to display a second screen for establishing a connection of the electronic device and the external electronic device.

8. The electronic device of claim 2,
wherein the at least one processor, when the instructions are executed, are configured to:
in the first state, transmit, to the battery of the external electronic device or the battery, power outputted from the interface, during a first time interval within a period, independently of the first input and the second input, and
transmit, to the external electronic device of the external electronic device or the battery, the power outputted from the interface, during a second time interval within the period.

9. The electronic device of claim 2,
wherein the external electronic device is a first external electronic device,
wherein the interface is a first interface,
wherein the housing of the electronic device includes a part for accommodating a second external electronic device, and
wherein the at least one processor, when the instructions are executed, are configured to:
in the second state, based on identification of the second external electronic device contacted with the portion, transmit, to the second external electronic device through a second interface different from the first interface, the power outputted from the battery.

10. The electronic device of claim 9,
wherein the at least one processor, when the instructions are executed, :
in the second state, request, to the first external electronic device, a display of a third screen for transmitting selectively to any one of the first external electronic device, or the second external electronic device, the power outputted from the battery.

11. A method of an electronic device, comprising:
identifying, using communication circuitry, an external electronic device contacted with a side of a housing where a coil is disposed;
based on a first data signal receiving from the external electronic device, displaying a screen for selecting any one of the electronic device or the external electronic device in the display,
based on identifying an input selecting the electronic device in the screen, transmitting, to the external electronic device through the communication circuitry, a second data signal corresponding to the identified input, and
receiving power outputted from the external electronic device using the coil, based on the transmitted second data signal.

12. The method of claim 11,
wherein the first data signal includes information indicating a time interval for the electronic device to receive the second data signal, and
wherein the method comprises transmitting, during the time interval, to the external electronic device through the communication circuitry, the second data signal.

13. The method of claim 11,
wherein the screen is a first screen, and
wherein the method comprises displaying, through the display, a second screen for establishing a connection of the electronic device and the external electronic device based on transmitting the second data signal.

14. The method of claim 13, comprising:
transmitting, through the communication circuitry, the second data signal to the external electronic device, based on at least one application stored on memory of the electronic device.

15. The method of claim 11, comprising:
based on a state of charge (SoC) of a battery of the electronic device, requesting, to the external electronic device through the communication circuitry, for ceasing transmission of the power.
